# EUROPEAN PATENT SPECIFICATION

(11) **EP 2 146 606 B1**
(45) Date of publication and mention of the grant of the patent: **09.12.2015**
(21) Application number: 08755465.5
(22) Date of filing: 14.05.2008
(51) Int. Cl.: B65D 1/34, B65D 81/26, B65D 81/34

(54) **MICROWAVABLE CONSTRUCT WITH CONTOURED HEATING SURFACE**
MIKROWELLENTAUGLICHE KONSTRUKTION MIT GEFORMTER ERHITZUNGSOBERFLÄCHE
SYSTÈME POUR FOUR À MICRO-ONDES AVEC SURFACE CHAUFFANTE PROFILÉE

(30) Priority: 15.05.2007 US 930253 P; 15.05.2007 US 803466; 15.05.2007 WO PCT/US2007/011615; 23.05.2007 US 931450 P; 10.01.2008 US 8356
(43) Date of publication of application: 27.01.2010
(60) Divisional application: 15183339.9
(73) Proprietor: Graphic Packaging International, Inc., Marietta, GA 30067 (US)
(72) Inventor: WNEK, Patrick, H., Sherwood, WI 54169 (US); LAFFERTY, Terrence, P., Neenah, WI 54956 (US); SUNDQUIST, Matthew, Brainerd, MN 56401 (US)
(74) Representative: Grättinger Möhring von Poschinger Patentanwälte Partnerschaft
(86) International application number: PCT/US2008/063615
(87) International publication number: WO 2008/144343

(56) References cited:
- EP-B1- 0 246 041
- WO-A-95/24110
- WO-A1-93/23971
- WO-A2-96/22228
- WO-A2-2005/085091
- GB-A- 2 407 153
- JP-A- 2003 165 582
- US-A- 4 831 224
- US-A- 5 519 195
- US-A1- 2001 000 732

## Description

### TECHNICAL FIELD

The present invention relates to various materials, packages, constructs, and systems for heating or cooking a food item in a microwave oven. In particular, the invention relates to various materials, packages, constructs, and systems for heating or cooking a food item in a microwave oven, where the food item has an irregular shape.

### BACKGROUND

Microwave ovens provide a convenient means for heating a variety of food items, including numerous dough-based and potato-based frozen convenience food items. Unfortunately, in many instances, such items tend to bow, dome, or otherwise warp during the freezing process instead of remaining in their original shape. As a result, many presently available microwave energy interactive packages are unable to provide sufficient contact with the surface of the food item to provide the desired balance of thorough heating with a browned, crisp outer surface. Thus, there is a need for improved materials and packages that provide the desired degree of heating, browning, and/or crisping of a food item having a contoured or irregular surface.

Document US 4831224 discloses a microwavable tray according to the preamble of claim 1.

### SUMMARY

In accordance with one aspect, the present invention is directed generally to various blanks for forming a microwave energy interactive tray, package, system, or other construct (collectively "constructs"), various constructs formed therefrom, various methods of making such constructs, and various methods of heating, browning, and/or crisping a food item having a contoured or irregular surface in a microwave oven.

The various constructs may include one or more features that enhance microwave heating, browning, and/or crisping of a food item. The various constructs also may include one or more features that accommodate the contours of a food item having an irregular surface, for example, a domed or bowed surface. For example, the various constructs may include one or more elevated or raised portions that bring the microwave enhancing features into closer proximity to the surface of the food item. In some instances, such raised portions may be shaped, sized, and/or configured to create the visual appearance of grill marks. Furthermore, the various constructs may include one or more features that allow moisture generated during the heating process to be vented away from the food item, thereby further enhancing browning and/or crisping. For example, in some examples, the construct may include one or more venting channels extending across at least a portion of the elevated portions.

The elevation patterns, the spacing between elevated portions, the height of the elevations, and the width and depth of the spaces therebetween may be selected based on the type of food item to be heated and the desired cooking effect. For example, greater or fewer elevated portions may be provided, depending on, for example, the degree of irregularity of the surface of the food item to be browned and/or crisped, the moisture content of the food item, the thickness of the food item, characteristics of the food item (e.g., fat content), and the surface area occupied by the food item.

Further, the construct may include one or more depressed portions (as viewed from one side of the construct) corresponding to the elevated portion in the other side of the construct. Where such depressed portions are in the bottom of a construct that, in use, lie adjacent the bottom of a microwave oven, such depressions may provide an insulating air gap that reduces heat loss from the microwave energy interactive element to the microwave oven floor and further enhances heating, browning, and/or crisping of the food item.

The elevated portions may be formed using any suitable method, process, or technique. In one aspect, the contours may be formed using a mechanical and/or thermal pressing process. In such a process, a blank typically is cut to the desired size and shape and placed into a forming mold or die with male and female sides. The male and female sides of the die are brought together, thereby applying pressure to the blank and deforming the blank to create the desired pattern of contours.

In one aspect, a tray for heating, browning, and/or crisping a food item in a microwave oven comprises a platform extending upwardly from a substantially planar base. The platform has a central portion and a peripheral portion. The central portion is elevated relative to the peripheral portion and the base, and the peripheral portion extends obliquely and outwardly from the central portion to the base. A microwave energy interactive element may overlie at least a portion of the central portion. The microwave energy interactive element also may overlie at least a portion of the peripheral area. In one example, the microwave energy interactive element comprises a layer of microwave energy interactive material that converts at least a portion of impinging microwave energy to thermal energy. For example, the microwave energy interactive element may comprise a susceptor.

If desired, the platform may be contoured to accommodate the shape of a food item. For example, the central portion and the peripheral portion of the platform each may independently be substantially curvilinear in shape or may be substantially planar or flattened in shape. In one example, the platform may have a curved surface, for example, a substantially domed surface.

If desired, the tray may include at least one venting channel extending at least partially across the platform. In one example, the channel extends through the peripheral portion. In another example, the tray includes a first centerline extending in a first direction and a second centerline extending in a second direction substantially perpendicular to the first centerline, and the channel extends in the first direction substantially perpendicular to the second centerline. In another example, the tray includes a plurality of channels, at least some of which are substantially parallel to one another. In still another example, tray may include at least one channel that is substantially perpendicular to at least one other channel.

In one variation, one more lines of disruption extend between points along the peripheral edge of the base. In one example, the peripheral edge includes a curvilinear portion and the points lie along the curvilinear portion of the peripheral edge.

In another variation, the tray may include a wall extending substantially upwardly from the base along at least a portion of the periphery.

According to another aspect of the invention, a tray for heating, browning, and/or crisping a food item in a microwave oven comprises a substantially planar base having a peripheral edge, a platform extending upwardly from the base within the periphery, and a microwave energy interactive element overlying at least a portion of the platform. The base includes a line of disruption extending between a pair of points along the peripheral edge.

In one variation, the pair of points lies along a curvilinear portion of the peripheral edge. In another variation, the base includes a second line of disruption extending between a second pair of points along the peripheral edge. The first line of disruption and the second line of disruption may be substantially parallel to one another. The first line of disruption and the second line of disruption may define respective handles for the tray. The handles may be adapted to be folded upwardly towards the platform along the respective first and second lines of disruption. The upwardly folded handles also may be used to define a guide edge for handling the tray during various manufacturing and post-manufacturing processes.

Additional aspects, features, and advantages of the present invention will become apparent from the following description and accompanying figures.

### BRIEF DESCRIPTION OF THE DRAWINGS

The description refers to the accompanying drawings in which like reference characters refer to like parts throughout the several views, and in which:
**FIG. 1A** is a schematic perspective view of an exemplary tray having a generally circular shape;
**FIG. 1B** is a schematic top plan view of the tray of **FIG. 1A****;**
**FIG. 1C** is a schematic cross-sectional view of the tray of **FIG. 1B** taken along a line **1C-1C;**
**FIG. 1D** is a schematic cross-sectional view of the tray of **FIG. 1B** taken along a line **1D-1D;**
**FIG. 1E** is a schematic top plan view of the tray of **FIGS. 1A-1D** including a microwave energy interactive element;
**FIG. 2** is a schematic top plan view of another exemplary tray, similar to the tray **of** **FIGS. 1A-1D****,** including a microwave energy interactive element having a patterned configuration;
**FIG. 3** is a schematic top plan view of yet another exemplary tray, similar to the tray of **FIGS**. **1A**-**1D**, including a microwave energy interactive element having a patterned configuration;
**FIG. 4** is a schematic top plan view of still another exemplary tray, similar to the tray of **FIGS. 1A-1D****,** including a microwave energy interactive element having a patterned configuration;
**FIG. 5** is a schematic top plan view of still another exemplary tray, similar to the tray of **FIGS. 1A**-**1E**, including a plurality of elongate apertures;
**FIG. 6A** is a schematic perspective view of another exemplary tray, including a plurality of channels;
**FIG. 6B** is a schematic top plan view of the tray of **FIG. 6A****;**
**FIG. 6C** is a schematic cross-sectional view of the tray of **FIG. 6B** taken along a line **6C-6C;**
**FIG. 6D** is a schematic cross-sectional view of the tray of **FIG. 6B** taken along a line **6D-6D;**
**FIG. 7A** is a schematic perspective view of an exemplary variation of the tray of **FIGS. 6A-6D**, including a plurality of side walls;
**FIG. 7B** is a schematic top plan view of the tray of **FIG. 7A****;**
**FIG. 7C** is a schematic cross-sectional view of the tray of **FIG. 7B** taken along a line **7C-7C;**
**FIG. 7D** is a schematic cross-sectional view of the tray of **FIG. 7B** taken along a line **7D-7D;**
**FIG. 8A** is a schematic perspective view of an exemplary variation of the tray of **FIGS. 6A-6D**, including additional channels;
**FIG. 8B** is a schematic top plan view of the tray of **FIG. 8A****;**
**FIG. 8C** is a schematic cross-sectional view of the tray of **FIG. 8B** taken along a line **8C-8C;**
**FIG. 8D** is a schematic cross-sectional view of the tray of **FIG. 8B** taken along a line **8D-8D;**
**FIG. 9A** is a schematic perspective view of an exemplary variation of the tray of **FIGS. 8A-8D**, including obliquely oriented channels;
**FIG. 9B** is a schematic top plan view of the tray of **FIG. 9A****;**
**FIG. 9C** is a schematic cross-sectional view of the tray of **FIG. 9B** taken along a line **9C-9C;**
**FIG. 9D** is a schematic cross-sectional view of the tray of **FIG. 9B** taken along a line **9D-9D;**
**FIG. 9E** is a schematic cross-sectional view of the tray of **FIG. 9B** taken along a line **9E-9E;**
**FIG. 10A** is a schematic perspective view of an exemplary variation of the tray of **FIGS. 8A-8D**, including a substantially planar heating surface;
**FIG. 10B** is a schematic top plan view of the tray of **FIG. 10A****;**
**FIG. 10C** is a schematic cross-sectional view of the tray of **FIG. 10B** taken along a line **10C-10C;**
**FIG. 10D** is a schematic cross-sectional view of the tray of **FIG. 10B** taken along a line **10D-10D;**
**FIG. 11A** is a schematic perspective view of another exemplary tray, having a generally square shape;
**FIG. 11B** is a schematic top plan view of the tray of **FIG. 11A****;**
**FIG. 11C** is a schematic cross-sectional view of the tray of **FIG. 11B** taken along a line **11C-11C;**
**FIG. 11D** is a schematic cross-sectional view of the tray of **FIG. 11B** taken along a line **11D-11D;**
**FIG. 11E** is a schematic cross-sectional view of the tray of **FIG. 11B** taken along a line **11E-11E;**
**FIG. 12A** is a schematic perspective view of a variation of the tray of **FIGS. 11A-11E**, including a plurality of channels;
**FIG. 12B** is a schematic top plan view of the tray of **FIG. 12A****;**
**FIG. 12C** is a schematic cross-sectional view of the tray of **FIG. 12B** taken along a line **12C-12C;**
**FIG. 12D** is a schematic cross-sectional view of the tray of **FIG**. **12B** taken along a line **12D-12D;**
**FIG. 13A** is a schematic perspective view of a variation of the tray of **FIGS. 11A-11E**, including a plurality of raised portions that collectively act as a platform;
**FIG. 13B** is a schematic top plan view of the tray of **FIG. 13A****;**
**FIG. 14A** is a schematic perspective view of another exemplary tray having a generally triangular shape;
**FIG. 14B** is a schematic top plan view of the tray of **FIG. 14A****;**
**FIG. 14C** is a schematic cross-sectional view of the tray of **FIG. 14B** taken along a line **14C-14C;**
**FIG. 14D** is a schematic cross-sectional view of the tray of **FIG. 14B** taken along a line **14D-14D;**
**FIG. 14E** is a schematic cross-sectional view of the tray of **FIG. 14B** taken along a line **14E-14E;**
**FIG. 15A** is a schematic perspective view of an exemplary variation of the tray of **FIGS. 14A-14D**, including a plurality of channels;
**FIG. 15B** is a schematic top plan view of the tray of **FIG. 15A****;**
**FIG. 15C** is a schematic cross-sectional view of the tray of **FIG. 15B** taken along a line **15C-15C;**
**FIG. 15D** is a schematic cross-sectional view of the tray of **FIG. 15B** taken along a line **15D-15D;**
**FIG. 15E** is a schematic cross-sectional view of the tray of **FIG. 15B** taken along a line **15E-15E;**
**FIG. 15F** is a schematic cross-sectional view of the tray of **FIG. 15B** taken along a line **15F-15F;**
**FIG. 16A** is a schematic perspective view of another exemplary variation of the tray of **FIGS. 14A-14D**, including a plurality of channels;
**FIG. 16B** is a schematic top plan view of the tray of **FIG. 16A****;**
**FIG. 16C** is a schematic cross-sectional view of the tray **of** **FIG. 16B** taken along a line **16C-16C;**
**FIG. 16D** is a schematic cross-sectional view of the tray of **FIG. 16B** taken along a line **16D-16D;**
**FIG. 16E** is a schematic cross-sectional view of the tray of **FIG. 16B** taken along a line **16E-16E;**
**FIG. 16F** is a schematic cross-sectional view of the tray of **FIG. 16B** taken along a line **16F-16F;**
**FIG. 17A** is a schematic perspective view of still another exemplary tray having a somewhat circular sector shape;
**FIG. 17B** is a schematic top plan view of the tray of **FIG. 17A****;**
**FIG. 17C** is a schematic cross-sectional view of the tray of **FIG. 17B** taken along a line **17C-17C;**
**FIG. 17D** is a schematic cross-sectional view of the tray of **FIG. 17B** taken along a line **17D-17D;**
**FIG. 17E** is a schematic end view of the tray of **FIG. 17B****,** viewed along a line **17E-17E;**
**FIG. 18A** is a schematic perspective view of an exemplary variation of the tray of **FIGS. 17A-17E** including additional channels;
**FIG. 18B** is a schematic top plan view of the tray of **FIG. 18A****;**
**FIG. 18C** is a schematic cross-sectional view of the tray of **FIG. 18B** taken along a line **18C-18C;**
**FIG. 18D** is a schematic cross-sectional view of the tray of **FIG. 18B** taken along a line **18D-18D;**
**FIG. 18E** is a schematic end view of the tray of **FIG. 18B****,** viewed along a line **18E-18E;**
**FIG. 19A** is a schematic perspective view of an exemplary variation of the tray of **FIGS. 17A-17E**, including additional channels;
**FIG. 19B** is a schematic top plan view of the tray of **FIG. 19A****;**
**FIG. 19C** is a schematic cross-sectional view of the tray of **FIG. 19B** taken along a line **19C-19C;**
**FIG. 19D** is a schematic cross-sectional view of the tray of **FIG. 19B** taken along a line **19D-19D;**
**FIG. 19E** is a schematic cross-sectional view of the tray of **FIG. 19B** taken along a line **19E-19E;**
**FIG. 20A** is a schematic perspective view of another exemplary tray according to various aspects of the invention, including a plurality of channels;
**FIG. 20B** is a schematic top plan view of the tray of **FIG. 20A****;**
**FIG. 20C** is a schematic cross-sectional view of the tray of **FIG. 20B** taken along a line **20C-20C;**
**FIG. 20D** is a schematic cross-sectional view of the tray of **FIG. 20B** taken along a line **20D-20D;**
**FIG. 21A** is a schematic perspective view of a variation of the tray of **FIG. 20A****.-20D,** according to various aspects of the invention;
**FIG. 21B** is a schematic top plan view of the tray of **FIG. 21A****;**
**FIG. 21C** is a schematic cross-sectional view of the tray of **FIG. 21B** taken along a line **21C-21C;**
**FIG. 21D** is a schematic cross-sectional view of the tray of **FIG. 21B** taken along a line **21D-21D;**
**FIG. 22A** is a schematic perspective view of another exemplary tray according to various aspects of the invention, having a generally circular shape and including lines of disruption that define a pair of opposed handles;

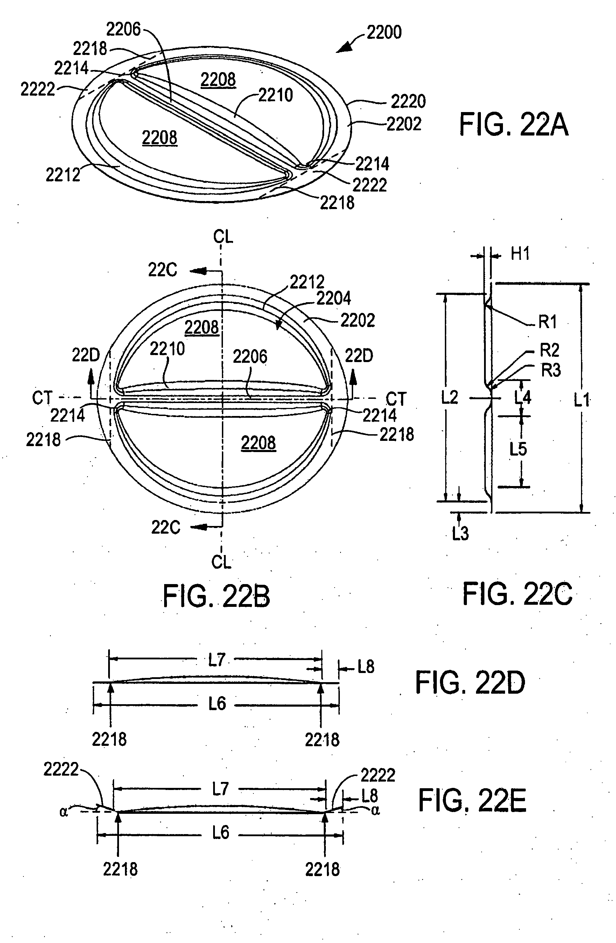

**FIG. 22** is a schematic top plan view of the tray of **FIG. 22A****;**
**FIG. 22C** is a schematic cross-sectional view of the tray of **FIG. 22B** taken along a line **22C-22C;**
**FIG. 22D** is a schematic cross-sectional view of the tray of **FIG. 22B** taken along a line **22D-22D;**
**FIG. 22E** is a schematic cross-sectional view of the tray of **FIG. 22B** taken along a line **22D-22D,** with the handles folded in a partially upright configuration;

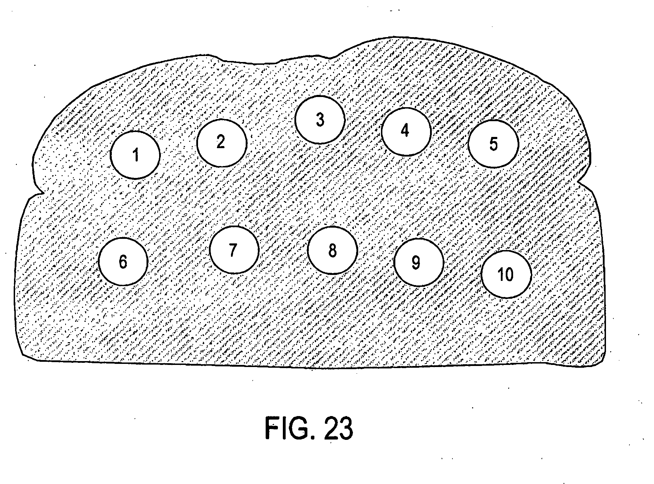

**FIG. 23** schematically illustrates various points on a slice of bread where the degree of browning was measured for bread pieces heated using a commercially available susceptor disk and for bread pieces heated using a tray according to the invention.

### DESCRIPTION

Various aspects of the invention may be illustrated by referring to the figures. For purposes of simplicity, like numerals may be used to describe like features. It will be understood that where a plurality of similar features are depicted, not all of such features necessarily are labeled on each figure. Additionally, it will be understood that where a particular reference character is used to denote a dimension on more than one figure or exemplary embodiment, the reference character may represent any numerical value, and the value may differ for each exemplary embodiment. For example, **"L1"** may be used to denote a particular length on multiple figures, but each may have a different numerical value in a given embodiment. Further, although several different exemplary aspects, implementations, and embodiments of the various inventions are provided, numerous interrelationships between, combinations thereof, and modifications of the various inventions, aspects, implementations, and embodiments of the inventions are contemplated hereby.

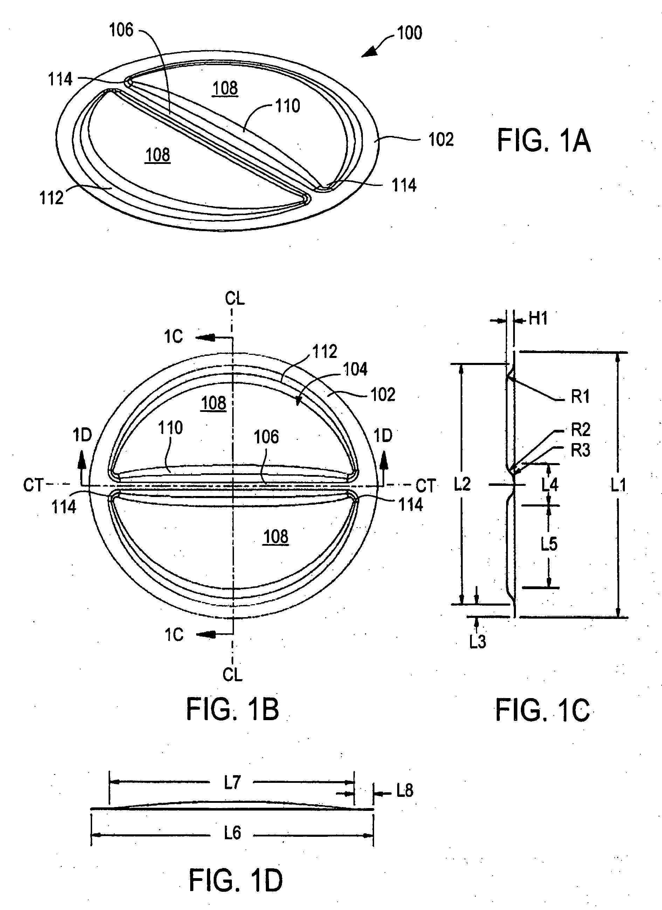

**FIGS. 1A-1D** depict an exemplary construct, in this example, a disk or tray **100** . The tray **100** is substantially circular in shape, and is substantially symmetrical along a longitudinal centerline **CL** and a transverse centerline **CT.** However, numerous other shapes and configurations are contemplated hereby. For example, the tray may have a triangular, rectangular, square, hexagonal, or any other regular and irregular shape. Likewise, the tray may include no lines of symmetry, a single line of symmetry, or multiple lines of symmetry.

The tray **100** includes a somewhat planar peripheral rim or base **102,** and a pair of opposed raised portions or platforms **104** that serve as surfaces for receiving one or more food items (not shown) thereon. The raised portions **104** are separated by a recess **106** that lies substantially within the same plane as the rim **102.** In this example, the recess **106** lies along the transverse centerline **CT.** However, the recess **106** may have any other suitable shape or position, as needed or desired for a particular application.

Still viewing **FIGS. 1A-1D****,** each platform **104** is substantially semi-circular in shape, suitable for receiving, for example, a half panini or other sandwich thereon. As best seen in **FIGS. 1A** and **1B****,** each platform **104** includes a top surface or face **108 (also** referred to as "uppermost surface" or "heating surface"), a somewhat upstanding interior face **110,** a somewhat upstanding exterior face **112,** and a pair of opposed corner faces **114.** It will be understood that, in this and other aspects of the invention, the various faces **108, 110, 112,** and **114** are described as being individual faces or surfaces merely for purposes of simplicity and ease of description, and that such faces or surfaces may be substantially continuous and without having a defined boundary between them. Furthermore, it will be understood that the platform may have any desired shape, and that numerous other regular and irregular shapes are contemplated hereby.

In this example, the interior face **110** and the exterior face **112** of each platform **104** extends obliquely, sloping outwardly and downwardly, and tapers in height from the top face **108** towards the recess **106** or rim **102,** respectively. Likewise, corner faces **114** slope outwardly and downwardly from the top face **108** towards the recess **106** and/or rim **102,** such that the corner face **114** has a generally rounded or convex shape. However, in this and other aspects, it is contemplated that the various faces that define the platform in accordance with the invention may be substantially upright, or may taper inwardly and downwardly from the platform, if needed or desired for a particular application.

If desired, one or both platforms **104** may be contoured to conform generally to the shape of a food item. In this example, each platform **104** is uniform in height **H1** when viewed along the longitudinal centerline **CL** of the tray **100,** as shown in **FIG. 1C**, and is bowed or crowned when viewed along the interior face **110** of the platform **104,** as shown in **FIG. 1D****,** such that the platform **104** and therefore, the top surface **108,** decreases in height, from the longitudinal centerline **CL** towards each of the corner faces **114.** Such a tray **100** may be particularly well-suited for use with food items that have a somewhat bowed shape, such as frozen dough based food items (e.g., sandwiches, pizzas, etc.).

The tray **100** may be characterized as having various heights, for example, **H1,** lengths, for example, **L1, L2, L3, L4, L5, L6, L7,** and **L8,** and radii of curvature, for example, **R1, R2,** and **R3,** each of which may vary for a particular application. The dimensions of each platform **104** may be substantially identical, such that the tray **100** is substantially symmetrical across each side of the longitudinal centerline **CL,** or may differ, such that the tray **100** is not symmetrical across each side of the longitudinal centerline **CL.** Likewise, the dimensions of each platform **104** may be substantially identical, such that the tray **100** is substantially symmetrical across each side of the transverse centerline **CT,** or may differ, such that the tray **100** is not symmetrical across each side of the transverse centerline **CT.**

If desired, any of the various trays of the invention may include features that alter the effect of microwave energy during the heating or cooking of the food item. For example, any of the trays may be formed at least partially from one or more microwave energy interactive elements (sometimes referred to as "microwave interactive elements") that promote browning and/or crisping of a particular area of the food item, shield a particular area of the food item from microwave energy to prevent overcooking thereof, or transmit microwave energy towards or away from a particular area of the food item. Each microwave interactive element comprises one or more microwave energy interactive materials or segments arranged in a particular configuration to absorb microwave energy, transmit microwave energy, reflect microwave energy, or direct microwave energy, as needed or desired for a particular microwave heating construct and food item.

The microwave interactive element may be supported on a microwave inactive or transparent substrate for ease of handling and/or to prevent contact between the microwave interactive material and the food item, as will be discussed in greater detail below. As a matter of convenience and not limitation, and although it is understood that a microwave interactive element supported on a microwave transparent substrate includes both microwave interactive and microwave inactive elements or components, such structures may be referred to herein as "microwave interactive webs".

In one example, the microwave interactive element may comprise a thin layer of microwave energy interactive material (generally less than about 100 angstroms in thickness, for example, from about 60 to about 100 angstroms in thickness) that tends to absorb at least a portion of impinging microwave energy and convert it to thermal energy (i.e., heat) at the interface with a food item. Such elements often are used to promote browning and/or crisping of the surface of a food item. When supported on a film or other substrate, such an element may be referred to as a "susceptor film" or, simply, "susceptor".

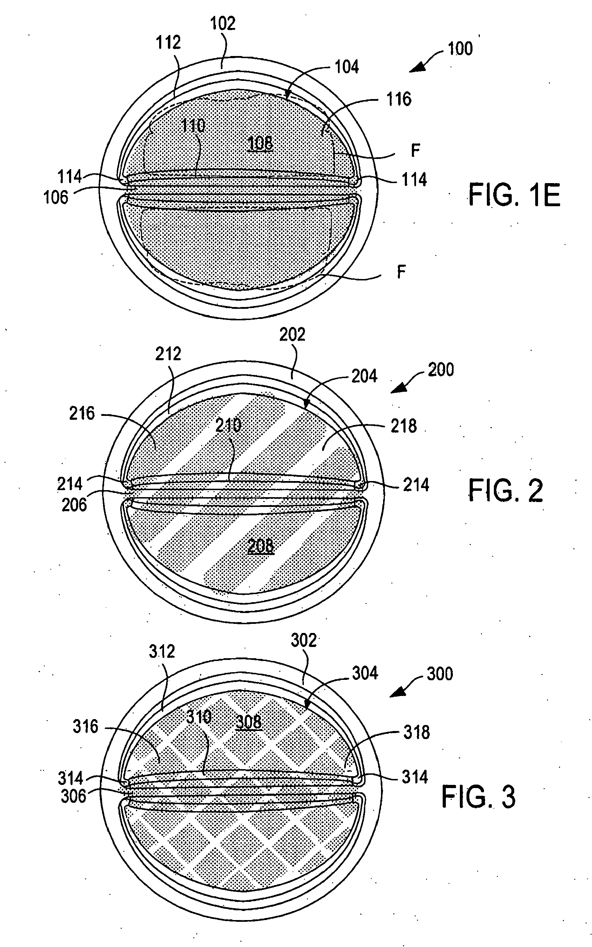

For example, as schematically shown in **FIG. 1E** by stippling, a microwave energy interactive element **116,** for example, a susceptor, may overlie all or a portion of each platform **104,** including all or a portion of the top surface **108,** recess **106,** interior face **110,** and/or corner faces **114** of one or both platforms **104.** A susceptor or other microwave energy interactive element also may overlie all or a portion of exterior face **112.**

Where the susceptor is supported on a polymer film, it will be understood that the polymer film substrate may overlie additional portions or substantially the entire tray, with the microwave energy interactive element (i.e., the susceptor) positioned between the substrate and the particular tray component in the desired location to heat, brown, and/or crisp the food item. In this manner, a tray according to the invention can be pressed or otherwise formed from a multilayer structure comprising the susceptor film joined to the material used to form the tray.

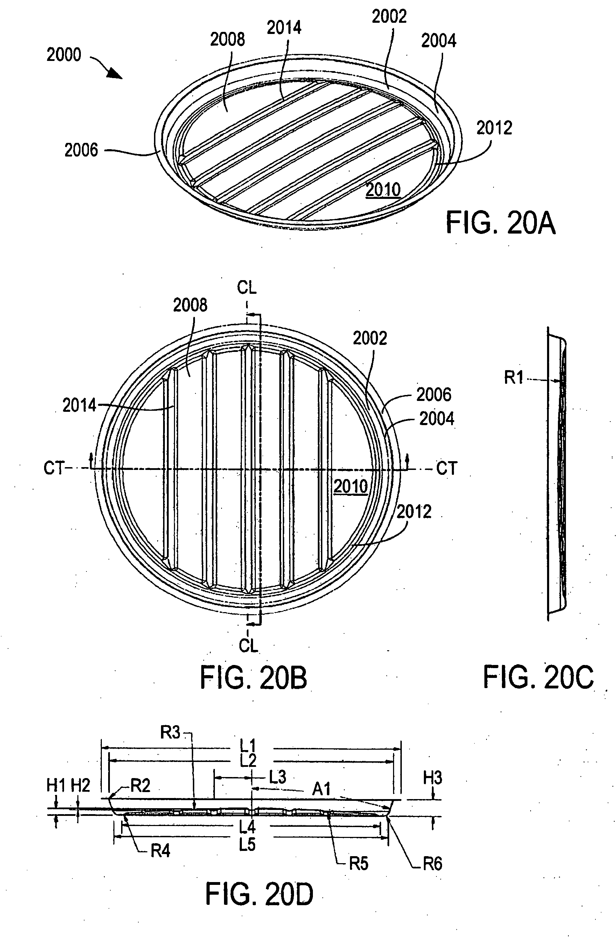

To use the tray, one or more food items **F** (shown schematically with dashed lines in **FIG. 1E****)** typically are placed on each platform and placed into a microwave oven (not shown). In one particular example, the food item is a sandwich that has been separated into two sections, each including a piece of bread and one or more toppings in an "open face" configuration. In another particular example, the food item is a pizza, which has been separated into, or provided as, two separate pieces, slices, or portions. In yet another example, the food item is a single item, for example, a pizza, that has not been divided into separate pieces, slices, or portions. In such an example, the pizza may overlie both platforms and the recess therebetween. Alternatively, it is contemplated that the tray may include a single platform having a generally circular shape to accommodate the doming of circular pizza. In this instance, the platform may have an overall domed configuration, such that the height of the platform decreases in any direction from the center of the platform outwardly towards the base of the tray (e.g., FIGS. 20A-21D). Alternatively still, it is contemplated that the tray may include a plurality of platforms, each intended to receive one or more of a plurality of items, or one or more portions of a plurality of items, to be heated.

In any case, the food items are positioned on the heating surface **108** of each platform **104** with the surface to be browned and/or crisped, for example, the bread or pizza crust, adjacent to the tray **100.** The contoured heating surface **108** of the platform **104** generally accommodates the contoured surface of the food item, which often is prone to browing during the freezing process, and brings the susceptor into closer proximity to the surface of the food item to be browned and/or crisped.

It is noted that, with any of the numerous trays contemplated hereby, the food item or items may be slightly larger than the respective platform, in this example, platform **104,** and therefore, the food may extend slightly beyond the "boundaries" of the heating surface, in this example, top **face 108.** As the food item thaws, any such portion of the food item extending beyond the heating surface may flex downwardly and be brought into proximate and/or intimate contact with the various upstanding faces of the platform, for example, faces **110, 112,** and/or **114.** Where a microwave energy interactive element, for example, a susceptor, overlies such faces, the faces may serve as heating surfaces to enhance browning and/or crisping of the corresponding portions of the food item.

As the microwave heating cycle progresses, the susceptor converts microwave energy to thermal energy, which then may be transferred to the adjacent surface of the food item. In this manner, the browning and/or crisping of the surface of the food item can be enhanced. Furthermore, platforms **104** maintain the food item in a position elevated from the floor or turntable of the microwave oven, which reduces the amount of sensible heat transferred from the susceptor to the ambient environment of the microwave oven and further enhances browning and/or crisping.

Any of the numerous microwave interactive elements described herein or contemplated hereby may be substantially continuous, that is, without substantial breaks or interruptions, or may be discontinuous, for example, by including one or more breaks or apertures that transmit microwave energy therethrough. The breaks or apertures may be sized and positioned to heat particular areas of the food item selectively. The number, shape, size, and positioning of such breaks or apertures may vary for a particular application depending on type of tray or other construct being formed, the food item to be heated therein or thereon, the desired degree of shielding, browning, and/or crisping, whether direct exposure to microwave energy is needed or desired to attain uniform heating of the food item, the need for regulating the change in temperature of the food item through direct heating, and whether and to what extent there is a need for venting.

It will be understood that the aperture may be a physical aperture or void in the material used to form the construct, or may be a non-physical "aperture". A non-physical aperture may be a portion of the tray that is microwave energy inactive by deactivation or otherwise, or one that is otherwise transparent to microwave energy. Thus, for example, the aperture may be a portion of the tray formed without a microwave energy interactive material or, alternatively, may be a portion of the tray formed with a microwave energy interactive material that has been deactivated. While both physical and non-physical apertures allow the food item to be heated directly by the microwave energy, a physical aperture also provides a venting function to allow steam or other vapors to be released from the food item.

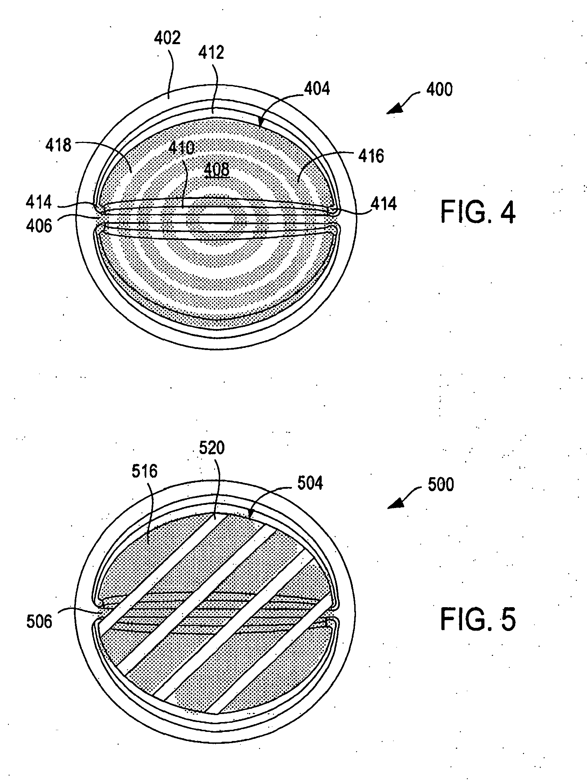

**FIGS. 2-5** illustrate numerous examples of microwave energy interactive trays according to the invention that include one or more discontinuities in the microwave energy interactive element. The various trays **200, 300, 400,** and **500** include features that are similar to tray **100** shown in **FIGS. 1A-1E****,** except for variations noted and variations that will be understood by those of skill in the art. For simplicity, the reference numerals of similar features are preceded in the figures with a **"2" (****FIG. 2****), "3" (****FIG. 3****), "4" (****FIG. 4),** or **"5" (FIG. 5****)** instead of a **"1".**

In the example shown in **FIG. 2****,** the microwave energy interactive element **216** comprises a plurality of spaced susceptor bands or stripes (shown by stippling) extending obliquely across the transverse centerline **CL** of the tray **200,** with microwave inactive or transparent areas **218** therebetween. The bands may have any width, orientation, and configuration as desired. When used to heat a food item, the microwave energy interactive bands may form a corresponding plurality of darkened areas on the outer surface of the food item. Such marks may resemble grill marks, such as with a panini grill.

In this and other aspects of the invention, it will be understood that the arrangement of microwave energy interactive and microwave energy transparent areas may be selected to provide various levels of heating, as needed or desired for a particular application. For example, where greater heating is desired, the total inactive area may be increased. In doing so, more microwave energy is transmitted to the food item. Alternatively, by decreasing the total inactive area, more microwave energy is absorbed by the microwave energy interactive areas, converted into thermal energy, and transmitted to the surface of the food item to enhance browning and/or crisping.

In the example shown in **FIG. 3****,** the microwave energy interactive element **316** comprises a plurality of substantially uniformly spaced susceptor squares (shown by stippling) with a grid-like arrangement of microwave energy transparent areas **318** therebetween. It will be understood that the dimensions of the susceptor squares and the spaces therebetween may vary for a particular application. Furthermore, it will be understood that the susceptor elements need not be in the shape of a square. Other shapes are contemplated hereby. In this example, the pattern of browning on the exterior surface of a food item may resemble a plurality of substantially uniformly spaced squares.

In the example shown in **FIG. 4****,** the microwave energy interactive element **416** comprises a plurality of concentric susceptor rings (shown by stippling) with microwave energy transparent areas or rings **418** therebetween. In this example, the pattern of browning on the exterior surface of a food item (not shown) may resemble a plurality of substantially uniformly spaced half circles, for example, where each food item overlies only one platform **404,** or a plurality of partial concentric circles, for example, where the food item overlies both platforms **404** and extends across recess **406.**

In the example shown in **FIG. 5****,** a plurality of physical apertures **520** extend through the thickness of the tray **500** and interrupt the microwave energy interactive element **516.** In this example, the apertures **520** are in the form of elongate slots that extend obliquely across the platforms **504.** However, it will be understood that the apertures may have any suitable shape, for example, circular, square, triangular, oval, oblong, or any other regular or irregular shape, may have any suitable configuration, for example, random, tiled, staggered, concentric rings, and may have any suitable placement, for example, central, peripheral, or throughout all or a portion of the tray. In this example, the pattern of browning may include plurality of obliquely oriented, darkened areas on the outer surface of the food item. Such darkened areas may resemble grill marks.

It will be understood that any of the various trays of the invention may include a microwave energy interactive element, for example, a susceptor, that renders the tray microwave energy interactive. In each embodiment, the microwave energy interactive element may be substantially continuous, may have one or more interruptions or discontinuities. Such interruptions or discontinuities may include non-physical apertures and/or physical (venting) apertures, for example, as shown in **FIGS. 2-5**, or may have any other pattern, arrangement, or configuration. It will be understood that the precise combination of features may be selected as needed or desired to enhance the heating, browning, and/or crisping of a particular food item. While such elements may be discussed below in connection with some of the various trays of the invention, such elements are not shown in the remaining figures.

Alternatively or additionally, any of the various trays of the invention may include one or more venting channels that allow moisture to escape from the food item, thereby further enhancing the heating, browning, and/or crisping of the food item.

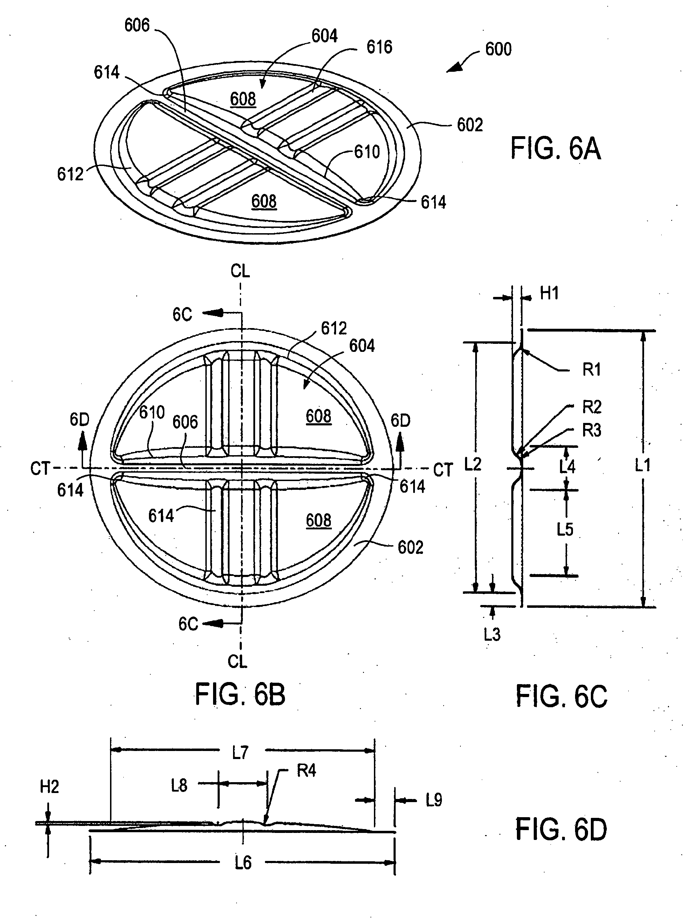

For example, **FIGS. 6A-6D** schematically illustrate still another exemplary disk or tray **600** according to various aspects of the invention. The tray **600** includes features that are similar to tray **100** shown in **FIGS. 1A-1D****,** except for variations noted and variations that will be understood by those of skill in the art. For simplicity, the reference numerals of similar features are preceded in the figures with a **"6"** instead of a **"1".**

In this example, a pair of substantially parallel channels **616** (or "grooves" or "indentations") extends across the top face **608** of each platform **604** between, and optionally through one or both of, the interior face **608** and the exterior face **612.** In this example, the channels **616** are substantially parallel to and substantially evenly spaced about the longitudinal centerline **CL,** and substantially perpendicular to the transverse centerline **CT.** However, the channels may have any orientation needed or desired for a particular application. In this and other examples described herein or contemplated hereby, the channels may have any suitable depth as needed to provide the desired degree of ventilation for the particular heating application. In one aspect, the channels have a depth that is less than the height of the top face, such that the bottom of at least one channel lies above the plane of the rim and/or recess of the tray.

If desired, one or both platforms **604** may be contoured to conform generally to the shape of a food item. In this example, the height **H1** of each platform **604** is substantially uniform when viewed along the longitudinal centerline **CL** of the tray **600,** as shown in **FIG. 6C****,** and varies in height when viewed along the interior face **610** of the platform **604,** as shown in **FIG. 6D****.** In this example, the height of the platform **604,** and therefore the height of the top face **608,** tapers or decreases when viewed from the longitudinal centerline **CL** toward the each of the corner faces **610.** However, other shapes and contours are contemplated.

The tray **600** may be characterized as having various heights, for example, **H1** and **H2,** lengths, for example, **L1, L2, L3, L4, L5, L6, L7, L8,** and **L9,** and radii of curvature, for example, **R1, R2, R3,** and **R4,** each of which may vary for a particular application. The dimensions of each platform **604** may be substantially identical or may differ, with various degrees of symmetry being contemplated hereby.

If desired, a microwave energy interactive element (not shown) may overlie and may be joined to at least a portion of the tray **600.** For example, a susceptor (not shown) may overlie all or a portion of one or both platforms **604,** including all or a portion of each top face **608,** interior face **610,** exterior face **612,** and/or corner **face 614,** all or a portion of recess **606,** and/or all or a portion of one or more of channels **616.**

To use the tray **600,** one or more food items (not shown) typically are placed on each platform and placed into a microwave oven (not shown). The contoured heating surface **608** of the platform **604** generally accommodates the contoured surface of the food item, which may vary as a result of the freezing process, and brings the susceptor into closer proximity to the surface of the food item to be browned and/or crisped.

As the microwave heating cycle proceeds, the susceptor converts microwave energy to thermal energy, which then is transferred to the adjacent surface of the food item. In this manner, the browning and/or crisping of the surface of the food item may be enhanced. At least some of any steam released from the food item may be carried away from the food item along channels **616,** thereby further enhancing browning and/or crisping. Additionally, platforms **604** maintain the food item in an elevated position, which reduces the amount of sensible heat transferred from the susceptor to the ambient environment of the microwave oven, still further enhancing the browning and/or crisping of the food item. The pattern of browning and/or crisping may include an overall darkened appearance with somewhat lighter areas corresponding to the areas overlying channels **616.**

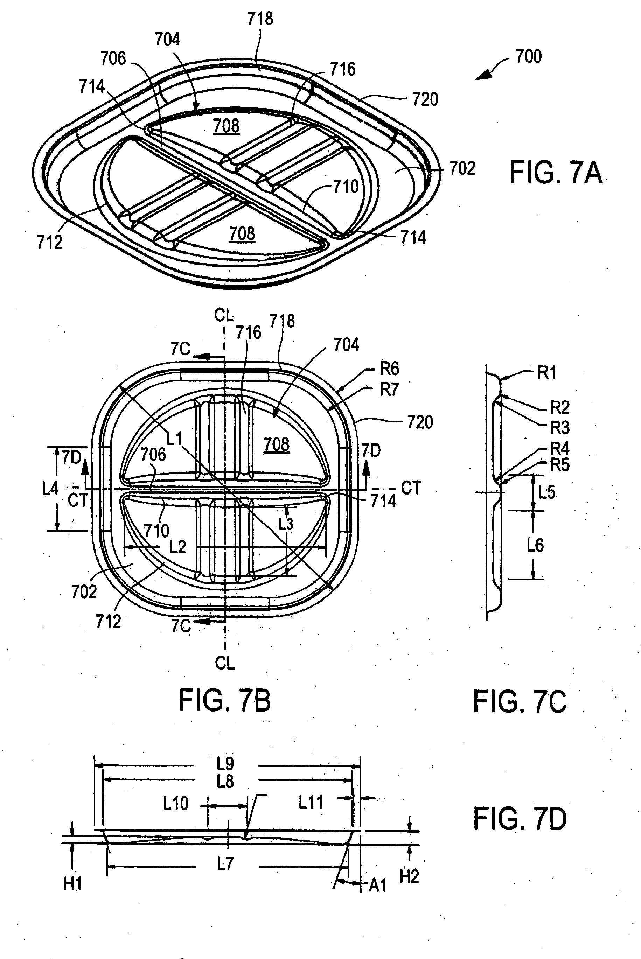

**FIGS. 7A-7D** schematically depict still another exemplary tray **700** according to various aspects of the invention. The tray **700** includes features that are similar to tray **100** shown in **FIGS. 1A-1D** and tray **600** shown in **FIGS. 6A-6D****,** except for variations noted and variations that will be understood by those of skill in the art. For simplicity, the reference numerals of similar features are preceded in the figures with a "7" instead of a **"1"** or **"6",** respectively.

In this example, the tray **700** includes a plurality of walls **718** extending substantially upwardly from the rim or flange **702,** which serves as a base or lowermost portion of the tray **700.** If desired, the walls **718** may be terminated with a lip **720.** If desired, a microwave energy interactive element (not shown) may overlie and may be joined to at least a portion of the tray **700.** For example, a susceptor (not shown) may overlie all or a portion of one or both platforms **704,** including all or a portion of each top face **708,** interior face **710,** exterior face **712,** and/or corner face **714,** all or a portion of recess **706,** and/or all or a portion of one or more of channels **716.** Such a tray **700 may** be suitable for use, for example, where the food item to be heated, browned, and/or crisped includes components that may otherwise fall from a tray without walls, or where it is desired that the tray serve as a container from which the food item is consumed.

The tray **700** may be characterized as having various heights, for example, **H1** and **H2,** lengths, for example, **L1, L2, L3, L4, L5, L6, L7, L8, L9**, **L10,** and **L11**, radii of curvature, for example, **R1, R2, R3, R4, R5, R6,** and **R7,** and angles, for example, **A1,** each of which may vary for a particular application. The specifications of each platform **704** may be substantially identical or may differ, with various degrees of symmetry being contemplated hereby.

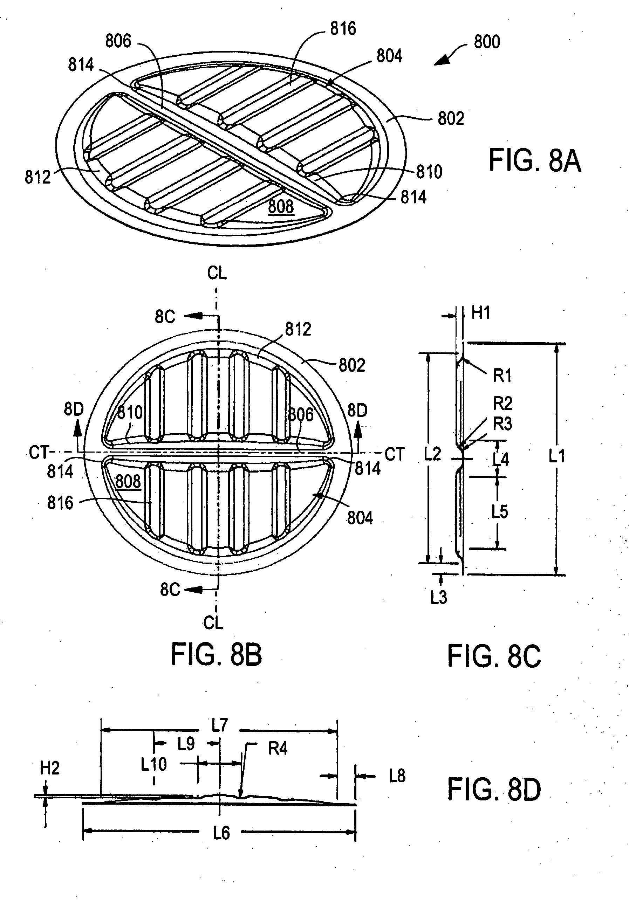

**FIGS. 8A-8D** schematically illustrate another exemplary disk or tray **800**. The tray **800** includes features that are similar to tray **100** shown in **FIGS. 1A-1D** and tray **600** shown in **FIGS. 6A-6D****,** except for variations noted and variations that will be understood by those of skill in the art. For simplicity, the reference numerals of similar features are preceded in the figures with an **"8"** instead of a **"1"** or **"6",** respectively.

In this example, the tray **800** includes four substantially parallel channels **816** or indentations extending across the top face **808** of each platform **804,** and optionally through one or both of, the interior face **810** and the exterior face **812.** Such additional channels **816** may be desirable where additional venting is needed to attain the desired degree of browning and/or crisping of a food item prepared thereon. The channels **816** may have any suitable depth as needed to provide the desired degree of ventilation for the particular heating application.

The tray **800** may be characterized as having various heights, for example, **H1** and **H2**, lengths, for example, **L1**, **L2, L3, L4, L5, L6, L7, L8, L9,** and **L10,** and radii of curvature, for example, **R1, R2, R3,** and **R4** each of which may vary for a particular application. The dimensions of each platform **804** may be substantially identical or may differ, with various degrees of symmetry being contemplated hereby.

As with the various other exemplary trays of the invention, a microwave energy interactive element (not shown) may overlie and may be joined to at least a portion of the tray **800.** For example, a susceptor (not shown) may overlie all or a portion of one or both platforms **804,** including all or a portion of each top face **808,** interior face **810,** exterior face **812,** and/or corner face **814,** all or a portion of recess **806, and/or** all or a portion of one or more of channels **816.** The resulting pattern of browning and/or crisping may include an overall darkened appearance with somewhat lighter areas corresponding to the areas overlying channels **816,** generally resembling grill marks.

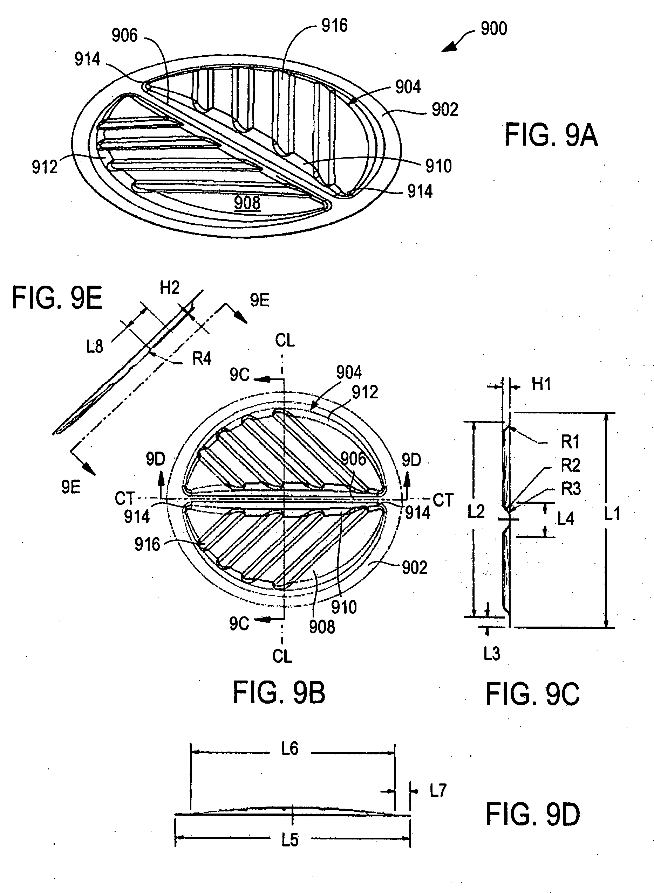

**FIGS. 9A-9E** schematically depict another exemplary tray **900**. The tray **900** includes features that are similar to tray **100 (****FIGS. 1A-1D****),** tray **600 (****FIGS. 6A-6D****),** and tray **800 (****FIGS. 8A-8D****),** except for variations noted and variations that will be understood by those of skill in the art. For simplicity, the reference numerals of similar features are preceded in the figures with a "9" instead of a **"1", "6",** or **"8"**, respectively.

In this example, the tray **900** includes four substantially parallel channels **916** or indentations extending obliquely across the top face **908** of each platform **904,** and optionally through one or both of, the interior face **910** and the exterior face **912**. Such additional channels **916** may be desirable where additional venting is needed to attain the desired degree of browning and/or crisping of a food item prepared thereon.

The tray **900** may be characterized as having various heights, for example, **H1** and **H2,** lengths, for example, **L1**, **L2, L3, L4, L5, L6, L7,** and **L8,** and radii of curvature, for example, **R1, R2, R3,** and **R4** each of which may vary for a particular application. The dimensions of each platform **904** may be substantially identical or may differ, with various degrees of symmetry being contemplated hereby.

If desired, a microwave energy interactive element (not shown) may overlie and may be joined to at least a portion of the tray **900.** For example, a susceptor (not shown) may overlie all or a portion of one or both platforms **904,** including all or a portion of each top face **908,** interior face **910,** exterior face **912,** and/or corner face **914,** all or a portion of recess **906,** and/or all or a portion of one or more of channels **916.** The resulting pattern of browning and/or crisping may include an overall darkened appearance with somewhat lighter, obliquely oriented areas corresponding to the areas overlying channels **916,** generally resembling grill marks.

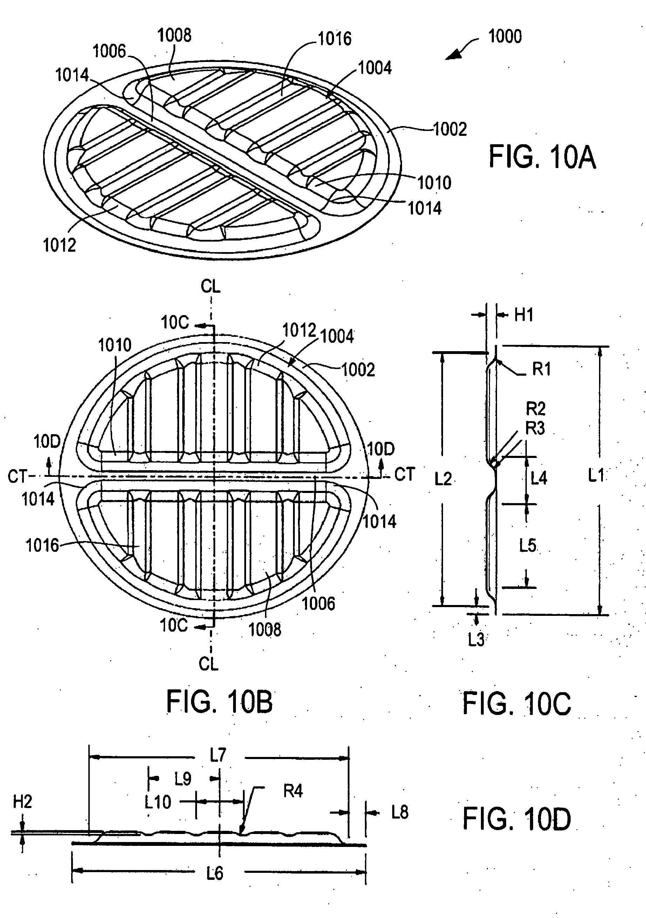

**FIGS. 10A-10D** schematically illustrate another exemplary tray **1000**. The tray **1000** includes features that are similar to tray **100 (****FIGS. 1A-1D****),** tray **600 (****FIGS. 6A-6D****),** and tray **800 (****FIGS. 8A-8D****),** except for variations noted and variations that will be understood by those of skill in the art. For simplicity, the reference numerals of similar features are preceded in the figures with a **"10"** instead of a "1", **"6",** or **"8",** respectively.

In this example, the platforms **1004** have a substantially planar top face **1008,** as best seen in **FIGS. 10C** and **10D****.** Such a tray **1000** may be particularly well-suited for use with food items that have a substantially planar surface.

The tray **1000** may be characterized as having various heights, for example, **H1** and **H2,** lengths, for example, **L1, L2, L3, L4, L5, L6, L7, L8, L9,** and **L10,** and radii of curvature, for example, **R1, R2, R3,** and **R4,** each of which may vary for a particular application.

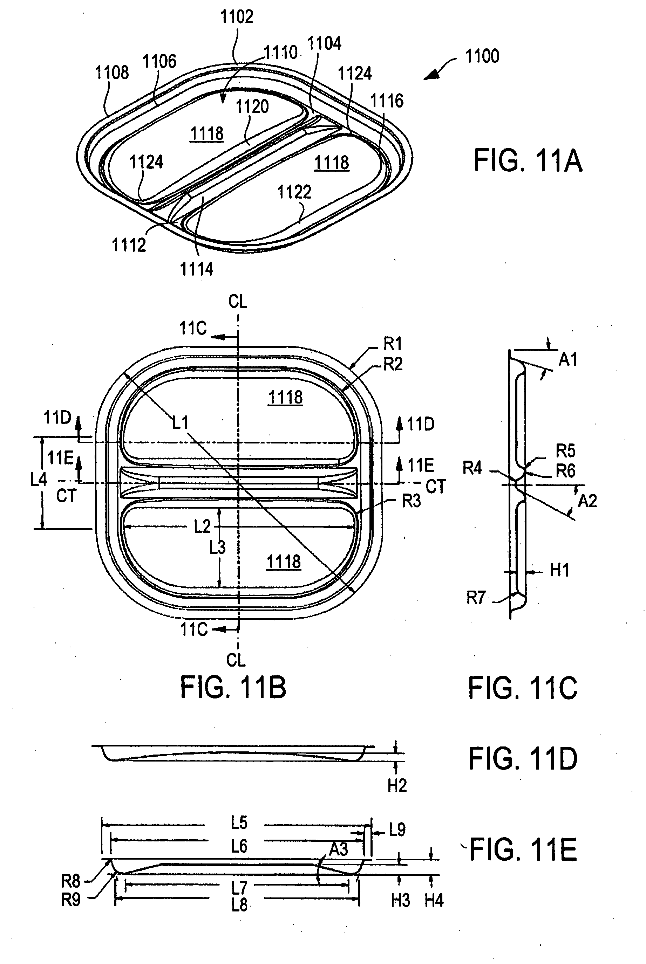

**FIGS. 11A-11E** schematically illustrate yet another exemplary tray **1100**. The tray **1100** is substantially symmetrical along a longitudinal centerline **CL** and a transverse centerline **CT.** However, the tray may include no lines of symmetry, a single line of symmetry, or multiple lines of symmetry, as needed or desired for a particular application.

In this example, the tray **1100** is substantially square in shape with somewhat rounded corners **1102.** The tray **1100** includes a somewhat planar peripheral rim or base **1104,** which serves as a base or lowermost portion of the tray **1100,** and a plurality of walls **1106** extending substantially upwardly from the rim **1104.** If desired, the walls **1106** may be terminated with a lip **1108.** Such a tray 1100 may be suitable for use, for example, where the food item to be heated, browned, and/or crisped includes components that may otherwise fall from a tray without walls, or where it is desired that the tray serve as a container from which the food item is consumed.

The tray **1100** includes a pair of opposed raised portions or platforms **1110** that serve as surfaces for receiving one or more food items (not shown) thereon. The platforms **1110** are separated by a recess **1112** that lies substantially within the same plane as the rim **1104.** In this example, the recess **1112** lies along the transverse centerline **CT.** However, the recess **1112** may have any other suitable position, as needed or desired for a particular application. The platforms **1110** optionally may be separated further by a divider **1114** extending upwardly along at least a portion of the length of the recess **1112.** The divider **1114** may assist the user with proper placement of the food items on the tray **1100** to achieve the desired level heating, browning, and/or crisping, and may assist with maintaining the food items in the proper location on the tray **1100** during the heating cycle.

Still viewing **FIGS. 11A-11D****,** the platforms **1110** are somewhat elongate and rectangular in shape with rounded corners **1116.** Each platform **1110** includes a top surface or face **1118** (also referred to as "uppermost surface" and "heating surface"), a somewhat upstanding interior face **1120,** a somewhat upstanding exterior face **1122,** and a pair of opposed corner faces **1124.** It will be understood that, in this and other aspects of the invention, the various faces **1118, 1120, 1122,** and **1124** are described as being individual faces or surfaces merely for purposes of simplicity and ease of description, and that such faces or surfaces may be substantially continuous and without having a defined boundary between them.

As shown in **FIG. 11B****,** the shape of the exterior surface **1122** in top plan view generally corresponds to or "tracks" the shape of the upstanding walls **1106.** The interior face **1120** and exterior face **1122** of each platform **1110** extend obliquely or slope, outwardly and downwardly, from the respective platform **1110** towards the recess **1112** or rim **1104,** respectively, as best seen in **FIG. 11C****.** However, in this and other aspects, it is contemplated that the various faces that form the platform in accordance with the invention may be substantially upright, or may taper inwardly and downwardly from the platform, if needed or desired for a particular application.

If desired, one or both platforms **1110** may be contoured to conform generally to the shape of a food item. In this example, the thickness of each platform **1110,** and therefore the height **H1** of each top face **1118,** is substantially uniform when viewed along the longitudinal centerline **CL** of the tray **1100,** as shown in **FIG. 11C****,** and varies in height when viewed along the interior face **1120** of the platform **1110,** as shown in **FIG. 11D****.** In this example, the thickness of the platform **1110,** and therefore the height of the top face **1118,** decreases or tapers from the longitudinal centerline **CL** toward the each of the corner faces **1124.**

The tray **1100** may be characterized **as** having various heights, for example, **H1, H2, H3,** and **H4,** lengths, for example, **L1**, L2, **L3, L4, L5, L6, L7, L8, and L9,** radii of curvature, for example, **R1, R2, R3, R4, R5, R6, R7, R8,** and **R9,** and angles, for example, **A1**, **A2**, and **A3,** each of which may vary for a particular application. The dimensions of each platform **1110** may be substantially identical, such that the tray **1100** is substantially symmetrical across each side of the longitudinal centerline **CL** and/or the transverse centerline **CT,** or may differ, such that the tray **1100** is not symmetrical across each side of the longitudinal centerline **CL** and/or the transverse centerline **CL.**

If desired, a microwave energy interactive element (not shown) may overlie and may be joined to at least a portion of the tray **1100.** For example, a susceptor (not shown) may overlie all or a portion of one or both platforms **1110,** including all or a portion of each top face **1118,** interior face **1120,** exterior face **1122,** and/or corner face **1124,** and/or all or a portion of recess **1112.**

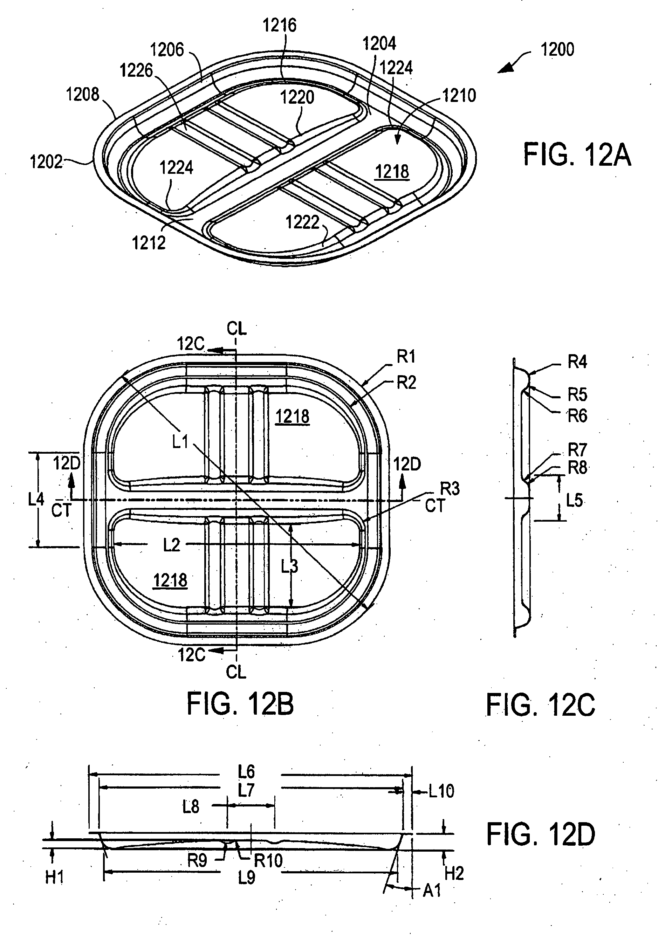

**FIGS. 12A-12D** schematically depict still another exemplary tray **1200**. The tray **1200** includes some features that are similar to tray **1100** shown in **FIGS. 11A-11D****,** except for variations noted and variations that will be understood by those of skill in the art. For simplicity, the reference numerals of similar features are preceded in the figures with a **"12"** instead of an **"11".**

In this example, a pair of substantially parallel venting channels **1226** extends across the top face **1218** of each platform **1210,** and optionally through one or both of, the interior face **1220** and the exterior face **1222.** The channels **1226** may have any suitable depth as needed to provide the desired degree of ventilation for the particular heating application. In this example, the channels **1226** are substantially parallel to and substantially evenly spaced about the longitudinal centerline **CL,** and substantially perpendicular to the transverse centerline **CT**. However, the channels **1226** may have any orientation needed or desired for a particular application. Additionally, it is noted that the tray **1200** does not include a transverse dividing wall **1114 (****FIGS. 11A-11E****).**

The tray **1200** may be characterized as having various heights, for example, **H1** and **H2,** lengths, for example, **L1**, L2, **L3, L4, L5, L6, L7, L8, L9,** and **L10,** radii of curvature, for example, **R1, R2, R3, R4, R5, R6, R7, R8, R9,** and **R10,** and angles, for example, **A1**, each of which may vary for a particular application. The dimensions of each platform **1210** may be substantially identical or may differ, and varying degrees of symmetry are contemplated hereby.

If desired, a microwave energy interactive element (not shown) may overlie and may be joined to at least a portion of the tray **1200.** For example, a susceptor (not shown) may overlie all or a portion of one or both platforms **1210,** including all or a portion of each top face **1218,** interior face **1220,** exterior face **1222,** and/or corner face **1224,** all or a portion of recess **1212,** and/or all or a portion of one or more of channels **1226.**

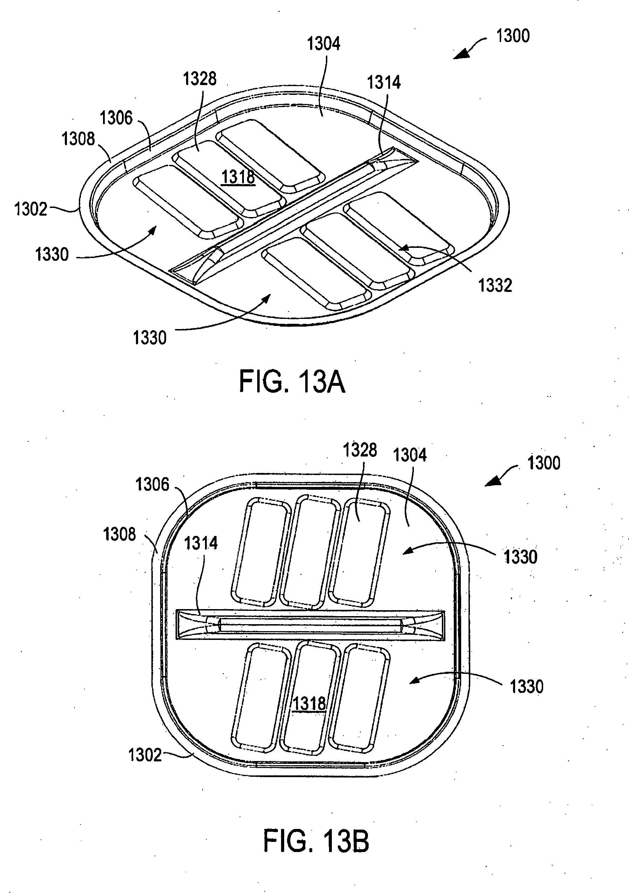

**FIGS. 13A** and **13B** schematically depict still another exemplary tray **1300** . The tray **1300** includes some features that are similar to tray **1100** shown in **FIGS. 11A-11D****,** except for variations noted and variations that will be understood by those of skill in the art. For simplicity, the reference numerals of similar features are preceded in the figures with a **"13"** instead of an **"11".**

In this example, platforms **1110** of **FIGS. 11A-11D** are replaced with a plurality of substantially rectangular raised portions **1328** arranged as a pair of opposed groups **1330** separated by transverse divider **1314.** Each group includes three raised portions **1328** arranged in a substantially parallel configuration oblique to transverse wall **1314.** However, other numbers, shapes, and arrangements of raised portions are contemplated. The raised portions **1328** within each group **1330** collectively serve as a platform for receiving a food item (not shown) thereon, with the spaces **1332** between adjacent raised portions **1328** providing ventilation of the food item (not shown) during the heating cycle.

If desired, a microwave energy interactive element (not shown) may overlie and may be joined to at least a portion of the tray **1300.** For example, a susceptor (not shown) may overlie all or a portion of one or more raised portions **1328** to enhance the heating, browning, and/or crisping of a food item heated thereon.

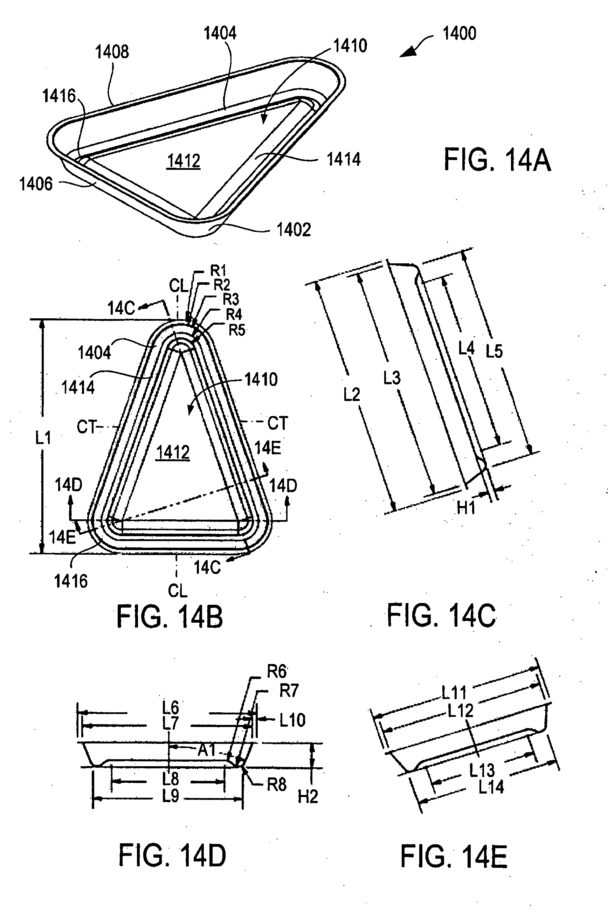

**FIGS. 14A-14E** schematically depict another exemplary tray **1400**. The tray **1400** is substantially triangular in shape with rounded comers **1402** and is substantially symmetrical along a longitudinal centerline **CL.** However, numerous other shapes and configurations are contemplated hereby. The tray **1400 also** includes a transverse centerline **CT,** as indicated in **FIG. 14B**.

The tray **1400** includes a rim or base **1404** and a plurality of walls **1406** extending upwardly from the base **1404.** The walls **1406** optionally terminate with a flange or lip **1408.** The tray **1400** further includes a substantially triangular shaped raised portion or platform **1410** including a top surface or face **1412** intended to receive a food item thereon, and a plurality of somewhat upstanding side faces **1414** joined by somewhat arcuate corner faces **1416.** In this example, the top surface **1412 is** substantially planar. However, it will be understood that contoured surfaces are contemplated hereby. The side faces **1414** and corner faces **1416** extend obliquely and outwardly from the top surface **1412** to the base **1404,** as best seen in **FIGS. 14C-14E****.**

It will be understood that, in this and other aspects of the invention, the various faces **1412, 1414,** and **1416** are described as being individual faces or surfaces merely for purposes of simplicity and ease of description, and that such faces or surfaces may be substantially continuous and without having a defined boundary between them. Furthermore, it will be understood that the platform may have any desired shape, and that numerous other regular and irregular shapes are contemplated hereby.

The various elements and aspects of the tray **1400** may be characterized as having various heights, for example, **H1** and **H2,** lengths, for example, **L1, L2**, **L3, L4, L5, L6, L7, L8, L9, L10, L11, L12, L13,** and **L14,** radii of curvature, for example, **R1, R2, R3, R4, R5, R6, R7,** and **R8,** and angles, for example, **A1**, each of which may vary for a particular application.

If desired, a microwave energy interactive element (not shown) may overlie and may be joined to at least a portion of the tray **1400.** For example, a susceptor (not shown) may overlie all or a portion of the platform **1410,** including all or a portion of top face **1412,** side faces **1414,** and/or corner faces **1416.** Additionally, as with the various other examples of constructs provided herein or contemplated hereby, the tray may include one or more physical apertures (not shown) to allow for venting through the sidewalls and/or bottom of the tray. The tray **1400** may be used as described above in connection with the various other exemplary trays.

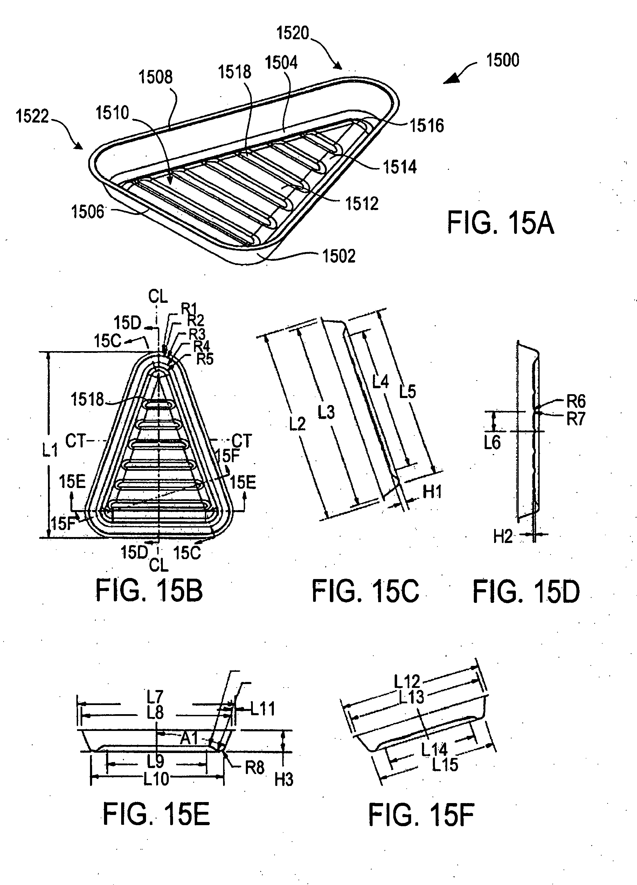

**FIGS. 15A-15F** schematically illustrate still another exemplary tray **1500** . The tray **1500** includes features that are similar to tray **1400** shown in **FIGS. 14A-14E****,** except for variations noted and variations that will be understood by those of skill in the art. For simplicity, the reference numerals of similar features are preceded in the figures with a **"15"** instead of a **"14".**

In this example, the tray **1500** includes a plurality of channels **1518** in the platform **1510** extending in a direction that is substantially parallel to transverse centerline **CT** and substantially perpendicular to longitudinal centerline **CL.** Other configurations are contemplated. In this example, the tray **1500** includes six channels **1518** of varying length, with shorter channels **1518** proximate a first, narrower end **1520** of the tray **1500,** and longer channels **1518** proximate a second, wider end **1522** of the tray **1500.** The channels **1518** may have any suitable depth as needed to provide the desired degree of ventilation for the particular heating application.

The tray **1500** may be characterized as having various heights, for example, **H1, H2,** and **H3,** lengths, for example, **L1, L2, L3, L4, L5, L6, L7, L8, L9, L10, L11, L12, L13, L14,** and **L15,** radii of curvature, for example, **R1**, **R2, R3, R4, R5, R6, R7,** and R8, and angles, for example, **A1**, each of which may vary for a particular application.

If desired, a microwave energy interactive element (not shown) may overlie and may be joined to at least a portion of the tray **1500.** For example, a susceptor (not shown) may overlie all or a portion of the platform **1510,** including all or a portion of top face **1512,** side faces **1514,** and/or corner faces **1516,** and/or all or a portion of one or more of channels **1518.** The tray **1500** may be used as described above.

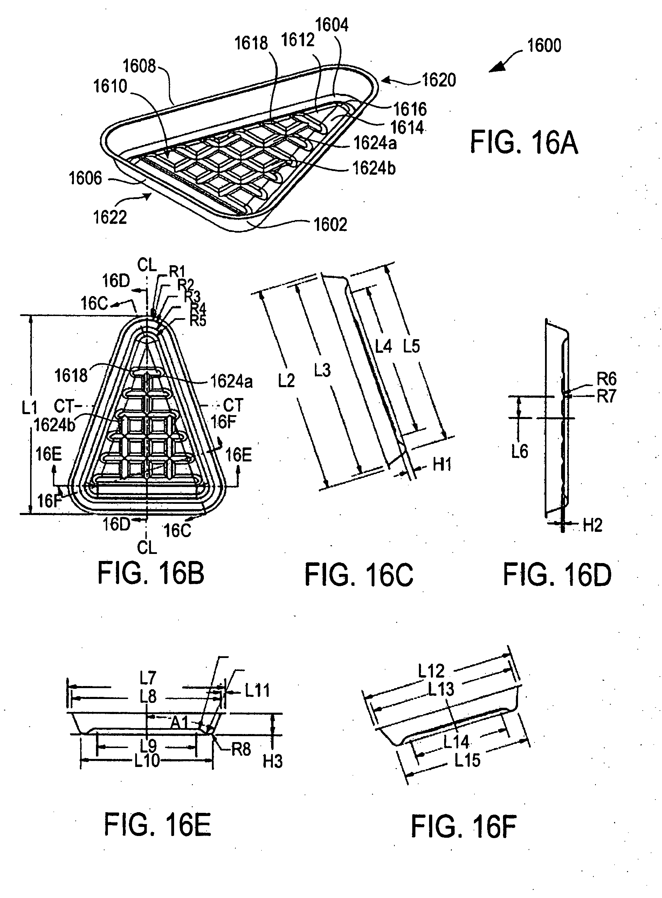

**FIGS. 16A-16F** schematically depict still another exemplary tray **1600**. The tray **1600** includes features that are similar to tray 1400 shown in **FIGS. 14A-14E** and tray **1500** shown in **FIGS. 15A-15F****,** except for variations noted and variations that will be understood by those of skill in the art. For simplicity, the reference numerals of similar features are preceded in the figures with a **"16"** instead of a **"14"** or **"15"**, respectively.

In this example, the tray **1600** includes a plurality of channels **1618** in the platform **1610** extending in a transverse direction substantially parallel to transverse centerline **CT** and substantially perpendicular to longitudinal centerline **CL,** and a plurality of grooves or channels **1624** extending in a longitudinal direction substantially parallel to longitudinal centerline **CL** and substantially perpendicular to transverse centerline **CT.** Such additional channels may be desirable where additional venting is needed.

In this example, the tray **1600** includes six transverse channels **1618** of varying length, with shorter channels **1618** proximate a first, narrower end **1620** of the tray **1600,** and longer channels **1618** proximate a second, wider end **1622** of the tray **1600**. The tray **1600** also includes three longitudinal channels **1624a, 1624b** of varying length, with the longest channel **1624a** proximate the longitudinal centerline CL and the shorter channels **1624b** proximate walls **1606.** However, other configurations may be used if desired. The channels **1618, 1624a, 1624b** may have any suitable depth as needed to provide the desired degree of ventilation for the particular heating application.

The tray **1600** may be characterized as having various heights, for example, **H1**, **H2,** and **H3,** lengths, for example, **L1, L2, L3, L4, L5, L6, L7, L8, L9, L10, L11, L12, L13, L14,** and **L15,** radii of curvature, for example, **R1**, **R2, R3, R4, R5**, **R6, R7,** and **R8,** and angles, for example, **A1**, each of which may vary for a particular application.

If desired, a microwave energy interactive element (not shown) may overlie and may be joined to at least a portion of the tray **1600.** For example, a susceptor (not shown) may overlie all or a portion of the platform **1610,** including all or a portion of top face **1612,** side faces **1614,** and/or corner faces **1616,** and/or all or a portion of one or more of channels **1618, 1624a,** and/or **1624b.** The tray **1600** may be used substantially as described above.

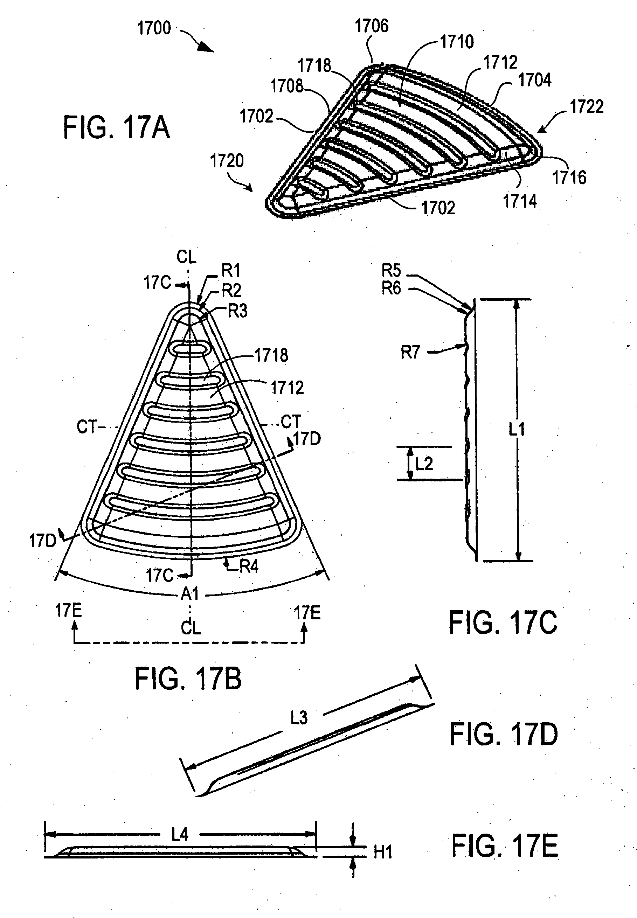

**FIGS. 17A-17E** schematically illustrate still another exemplary tray **1700.** The tray **1700** generally has the shape of a sector of a circle, with a pair of radial sides **1702**, an arcuate side **1704**, and rounded corners **1706** joining the radial sides **1702** and arcuate side **1704.** The tray **1700** is substantially symmetrical along a longitudinal centerline **CL.** The tray **1700** also includes a transverse centerline **CL**.

The tray **1700** includes a peripheral rim **1708** and a platform **1710** extending upwardly from the rim **1708.** The platform **1710** includes a substantially planar top surface or face **1712** for receiving a food item (not shown) and a plurality of adjoined side faces **1714** and comer faces **1716** that extend obliquely and outwardly between the top face **1712** to the rim **1708.** The platform **1710** includes a plurality of channels **1718** extending in a generally transverse direction. In this example, the platform **1710** includes six channels of varying length, with shorter channels **1718** proximate a first, narrower end **1720** of the tray **1700,** and longer channels proximate a second, wider end **1722** of the tray **1700** (i.e., proximate the arcuate side **1704** of the tray **1700).** The channels **1718** may have any suitable depth as needed to provide the desired degree of ventilation for the particular heating application. Each channel **1718** may have a radius of curvature similar to that of the arcuate side **1704,** in this example, **R4.** However, numerous other configurations are contemplated hereby.

The tray **1700** may be characterized as having various heights, for example, **H1,** lengths, for example, **L1, L2, L3,** and **L4,** radii of curvature, for example, **R1, R2, R3, R4, R5, R6,** and **R7,** and angles, for example, **A1,** each of which may vary for a particular application.

If desired, a microwave energy interactive element (not shown) may overlie and may be joined to at least a portion of the tray **1700.** For example, a susceptor (not shown) may overlie all or a portion of the platform **1710,** including all or a portion of top face **1712,** side faces **1714,** and/or corner faces **1716,** and/or all or a portion of one or more of channels **1718.**

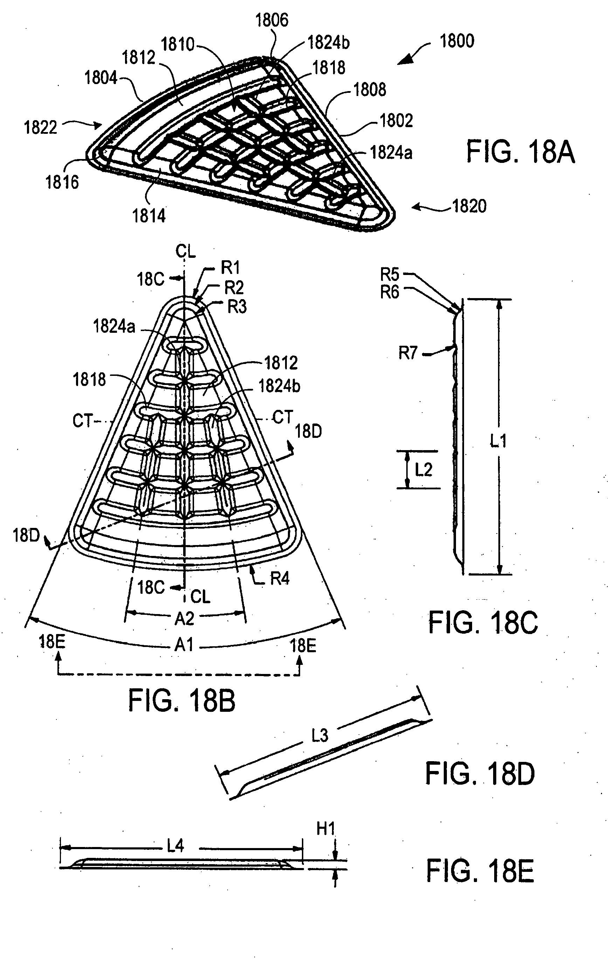

**FIGS. 18A-18E** schematically illustrate still another exemplary tray **1800** . The tray **1800** includes features that are similar to tray **1700** shown in **FIGS. 17A-17E****,** except for variations noted and variations that will be understood by those of skill in the art. For simplicity, the reference numerals of similar features are preceded in the figures with an **"18"** instead of a **"17".**

In this example, in addition to channels **1818** extending in a generally transverse direction, the platform **1810** includes a plurality of channels **1824a, 1824b** extending in a generally longitudinal direction. In this example, the tray **1800** includes three generally longitudinal channels **1824a, 1824b** of varying length, with the longest channel **1824a** proximate to the longitudinal centerline **CL** and the shorter channels **1824b** proximate radial sides **1802.** Channels **1824b** are aligned obliquely with respect to channel **1824a** and longitudinal centerline **CL,** such that each channel **1824b** is substantially equidistant from faces **1814** and channel **1824a,** which is substantially aligned with the longitudinal centerline **CL.** However, numerous other arrangements are contemplated by the invention. The various channels **1818, 1824a, 1824b** may have any suitable depth as needed to provide the desired degree of ventilation for the particular heating application.

The tray **1800** may be characterized as having various heights, for example, **H1,** lengths, for example, **L1, L2, L3,** and **L4,** radii of curvature, for example, **R1,** R2, **R3, R4, R5, R6,** and **R7,** and angles, for example, **A1** and **A2**, each of which may vary for a particular application.

If desired, a microwave energy interactive element (not shown) may overlie and may be joined to at least a portion of the tray **1800.** For example, a susceptor (not shown) may overlie all or a portion of the platform **1810,** including all or a portion of top face **1812,** side faces **1814,** and/or corner faces **1816,** and/or all or a portion of one or more of channels **1818, 1824a,** and/or **1824b.**

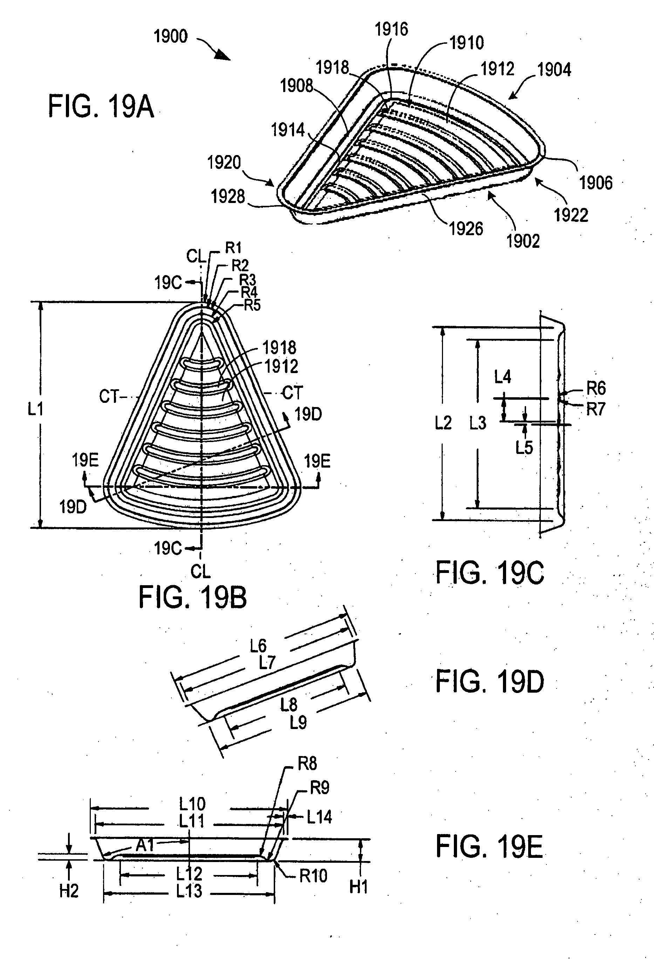

**FIGS. 19A-19E** schematically illustrate still another exemplary tray **1900** . The tray **1900** includes features that are similar to tray **1700** shown in **FIGS. 17A-17E****,** except for variations noted and variations that will be understood by those of skill in the art. For simplicity, the reference numerals of similar features are preceded in the figures with a **"19"** instead of a **"17".**

In this example, the tray **1900** includes a plurality of adjoined side walls **1926 and** corner walls **1928** extending upwardly from the rim **1908.** Such a tray might be suitable, for example, where the food item heated in the tray includes components that may fall from the food item, or where it is desired that the tray be used as a container for transporting the food item before or during consumption. As with the numerous other examples herein, the walls may include one or more apertures extending therethrough to provide additional ventilation during the heating cycle.

If desired, a microwave energy interactive element (not shown) may overlie and may be joined to at least a portion of the tray **1900.** For example, a susceptor (not shown) may overlie all or a portion of the platform **1910,** including all or a portion of top face **1912,** side faces **1914,** and/or corner faces **1916,** and/or all or a portion of one or more of channels **1918.** The tray **1900** may be characterized as having various heights, for example, **H1** and **H2,** lengths, for example, **L1, L2, L3, L4, L5, L6, L7, L8, L9, L10, L11, L12, L13,** and **L14,** radii of curvature, for example, **R1, R2, R3, R4, R5, R6, R7, R8, R9,** and **R10,** and angles, for example, **A1,** each of which may vary for a particular application.

**FIGS. 20A-20D** depict yet another exemplary tray **2000** according to various aspects of the invention. The tray **2000** is substantially circular in shape, and is substantially symmetrical along a longitudinal centerline **CL** and a transverse centerline **CT.**

The tray **2000** includes a rim or base **2002** and a plurality of walls **2004** extending upwardly from the base **2002.** The walls **2004** optionally terminate with a flange or lip **2006.** The tray **2000** further includes a substantially circular shaped raised portion or platform **2008** including a top surface or face **2010** ("central portion") intended to receive a food item thereon and a somewhat upstanding peripheral or circumferential face **2012** ("peripheral portion") extending obliquely, sloping outwardly and downwardly and tapering in height, from the top face **2010** towards the base **2004,** as best seen in **FIGS. 20C** and **20D****.** However, it will be understood that the circumferential face **2012** may be substantially perpendicular to the top surface **2010** and/or the base **2004,** or may taper inwardly, if desired.

Still viewing **FIGS. 20A-20C****,** the tray **2000** includes a plurality of substantially parallel venting channels **2014** of varying length extending across at least a portion of the top face **2010** of the platform **2008,** and optionally through at least a portion of the circumferential face **2012.** In this example, the tray **2000** includes five venting channels **2014** substantially parallel to and substantially evenly spaced about the longitudinal centerline **CL,** and substantially perpendicular to the transverse centerline **CT.** However, a fewer or greater number of channels may be used if needed or desired, and any of such channels may have any orientation needed or desired for a particular application. Furthermore, each of the channels **2014** may have any suitable depth as needed to provide the desired degree of ventilation for the particular heating application.

If desired, the platform **2008** may be contoured to conform generally to the shape of a food item. The central portion and the peripheral portion of the platform each may independently be substantially curvilinear in shape or may be substantially planar or flattened in shape, as needed for a particular food item. In this example, the platform **2008** is substantially domed or crowned when viewed along both the transverse centerline **CT** and the longitudinal centerline **CL,** such that the height **H1** of the platform decreases from the center of the platform **2008** outwardly in any direction towards the base **2004.** Both the central portion **2010** and the peripheral portion or face **2012** of the tray **2000** are substantially curvilinear, with the peripheral portion **2012** being slightly more planar than the central portion **2010.** Such a tray **2000** may be particularly well-suited for use with food items that have a somewhat bowed or domed shape, such as frozen dough based food items, for example, circular pizzas.

The tray **2000** may be characterized as having various heights, for example, **H1, H2,** and **H3,** lengths, for example, **L1, L2, L3, L4,** and **L5,** radii of curvature, for example, **R1, R2, R3, R4, R5,** and **R6,** and angles, for example, **A1,** each of which may vary for a particular application.

If desired, a microwave energy interactive element (not shown) may overlie and may be joined to at least a portion of the tray **2000.** For example, a susceptor (not shown) may overlie all or a portion of the platform **2008,** including all or a portion of top face **2010** and/or circumferential face **2012,** and/or all or a portion of one or more of channels **2014.**

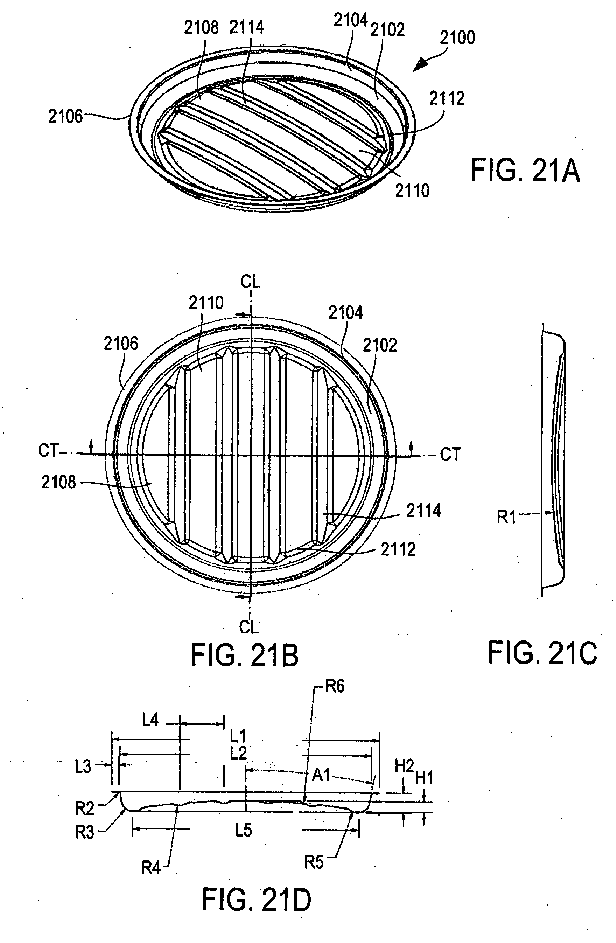

**FIGS. 21A-21D** schematically illustrate still another exemplary tray **2100** according to various aspects of the invention. The tray **2100** includes features that are similar to tray **2000** shown in **FIGS. 20A-20D****,** except for variations noted and variations that will be understood by those of skill in the art. For simplicity, the reference numerals of similar features are preceded in the figures with a **"21"** instead of a **"20".**

In this example, the tray **2100** includes four venting channels **2114** extending at least partially across the platform **2108** and, optionally, at least partially through the circumferential face **2112.**

The tray **2100** may be characterized as having various heights, for example, **H1** and **H2,** lengths, for example, **L1, L2, L3, L4,** and **L5,** radii of curvature, for example, **R1, R2, R3, R4, R5,** and **R6,** and angles, for example, **A1,** each of which may vary for a particular application.

If desired, a microwave energy interactive element (not shown) may overlie and may be joined to at least a portion of the tray **2100.** For example, a susceptor (not shown) may overlie all or a portion of the platform **2108,** including all or a portion of top face **2110** and/or circumferential face **2112,** and/or all or a portion of one or more of channels **2114.**

According to another aspect of the invention, any of the various trays may be provided with features that assist with handing the tray before, during, and after use. For example, the trays illustrated schematically in **FIGS. 7A-7D****,** **11A-16F****,** and **19A-21D** include dimensionally stable walls (e.g., walls **718)** that may be formed by, for example, thermal and/or mechanical pressing. It will be apparent that such features may be used to grasp the tray, for example, when the tray is removed from the microwave oven. However, such features also may assist with various stages of the manufacturing and distribution process. For example, the walls may be grasped during manufacturing to facilitate transfer between equipment, stacking of the trays, and packing of the trays into cases for shipment.

The need for such a grasping feature is particularly evident, for example, with a tray having a curvilinear peripheral edge, for example, as shown (but not labeled in), **FIGS. 1A-6D****,** **8A-10D****,** and **17A-18E****.** To stack a plurality of such trays efficiently, the respective platforms (e.g., platform **708)** of the various trays ideally are substantially aligned with one another in a superposed arrangement. However, as the trays are stacked, each tray may need to be reoriented relative to the adjacent tray to achieve the alignment needed to allow the trays to nest with one another. Therefore, in accordance with another aspect of the invention, the tray may be provided with handles that may be defined by one or more lines of disruption. The handles may serve both as a grasping feature for the user and as an "edge" for handling the trays and/or guiding the trays into alignment during any of numerous manufacturing, distribution, and/or packaging processes.

One example of a tray with a foldably defined grasping feature is illustrated schematically in **FIGS. 22A-22E****.** The tray **2200** includes features that are similar to tray **100** shown in **FIGS. 1A-1D****,** except for variations noted and variations that will be understood by those of skill in the art. For simplicity, the reference numerals of similar features are preceded in the figures with a **"22"** instead of a **"1".**

In this example, the tray **2200** includes a pair of lines of disruption **2218** substantially parallel to and opposite one another. Each line of disruption **2218** extends substantially between respective pairs of points along the curvilinear peripheral edge **2220** of the tray **2200.** However, other configurations, positions, and numbers of handles are contemplated by the invention. The lines of disruption **2218** define a pair of substantially opposed handles **2222** that are adapted to be folded out of the plane of the base **2202** towards the respective platform **2208** along the respective lines of disruption **2218,** as illustrated schematically in **FIGS. 22D** and **22E****.** The handles **2222** may be folded to any extent needed, such that an angle **α** formed between each respective handle **2222** and the plane of the base **2202** may be greater than 0° up to 180°, for example, from about 5° to about 115°, from about 15° to about 90°, from about 25° to about 75°, or from about 30° to about 60°, for example, about 45°. When folded in this manner, the handles **2222** may be used by the user to grasp the tray **2200** before and after use.

Additionally, when each respective handle **2222** is folded upwardly, the line of disruption **2218** defines a substantially linear "guide edge" that may be used as a guide or reference point that may be used during manufacturing, packaging, and/or distribution, for example, to position one tray relative to one another accurately. Thus, in the example shown in **FIGS. 22A-22E****,** the guide edge **2218** may be used to orient the trays **2200** to bring the respective platforms **2208** of each tray into substantial alignment with to one another. As a result, the trays may be stacked and/or nested more efficiently and more effectively.

In some embodiments, one or more of the lines of disruption **2218** may be positioned to be substantially perpendicular to the longitudinal centerline **CL** or the transverse centerline **CT.** In this example, the recess **2206** lies along the transverse centerline **CT.** Thus, the line of disruption **2218** also is substantially perpendicular to the recess **2206.** However, other positions and configurations are contemplated.

Any suitable line of disruption may be used to define the handles in accordance with the invention. In one example, the line of disruption is in the form of a fold line. The fold line can be any substantially linear, although not necessarily straight, form of weakening that facilitates folding therealong. More specifically, but not for the purpose of narrowing the scope of the present invention, the fold line may be a score line, such as a line formed with a blunt scoring knife, or the like, which creates a crushed portion in the material along the desired line of weakness, a cut or series of cuts that extend partially and/or completely into a material along the desired line of weakness, or any combination of these features.

Numerous materials may be suitable for use in forming the various constructs of the invention, provided that the materials are resistant to softening, scorching, combusting, or degrading at typical microwave oven heating temperatures, for example, at from about 250°F to about 425°F. The particular materials used may include microwave energy interactive materials and microwave energy transparent or inactive materials.

For example, all or a portion of each tray may be formed at least partially from a paperboard material, which may be cut into a blank prior to use in the tray. For example, a tray may be formed at least partially from paperboard having a basis weight of from about 60 to about 330 lbs/ream (lbs/3000 sq. ft.), for example, from about 80 to about 140 lbs/ream. The paperboard generally may have a thickness of from about 6 to about 30 mils, for example, from about 12 to about 28 mils. In one particular example, the paperboard has a thickness of about 12 mils. Any suitable paperboard may be used, for example, a solid bleached or solid unbleached sulfate board, such as SUS® board, commercially available from Graphic Packaging International. Alternatively, all or a portion of the tray may be formed at least partially from a polymer or polymeric material, for example, coextruded polyethylene terephthalate or polypropylene. Other materials are contemplated hereby.

The microwave energy interactive material may be an electroconductive or semiconductive material, for example, a metal or a metal alloy provided as a metal foil; a vacuum deposited metal or metal alloy; or a metallic ink, an organic ink, an inorganic ink, a metallic paste, an organic paste, an inorganic paste, or any combination thereof. Examples of metals and metal alloys that may be suitable for use with the present invention include, but are not limited to, aluminum, chromium, copper, inconel alloys (nickel-chromium-molybdenum alloy with niobium), iron, magnesium, nickel, stainless steel, tin, titanium, tungsten, and any combination or alloy thereof.

Alternatively, the microwave energy interactive material may comprise a metal oxide. Examples of metal oxides that may be suitable for use with the present invention include, but are not limited to, oxides of aluminum, iron, and tin, used in conjunction with an electrically conductive material where needed. Another example of a metal oxide that may be suitable for use with the present invention is indium tin oxide (ITO). ITO can be used as a microwave energy interactive material to provide a heating effect, a shielding effect, a browning and/or crisping effect, or a combination thereof. For example, to form a susceptor, ITO may be sputtered onto a clear polymer film. The sputtering process typically occurs at a lower temperature than the evaporative deposition process used for metal deposition. ITO has a more uniform crystal structure and, therefore, is clear at most coating thicknesses. Additionally, ITO can be used for either heating or field management effects. ITO also may have fewer defects than metals, thereby making thick coatings of ITO more suitable for field management than thick coatings of metals, such as aluminum.

Alternatively still, the microwave energy interactive material may comprise a suitable electroconductive, semiconductive, or non-conductive artificial dielectric or ferroelectric. Artificial dielectrics comprise conductive, subdivided material in a polymer or other suitable matrix or binder, and may include flakes of an electroconductive metal, for example, aluminum.

The substrate typically comprises an electrical insulator, for example, a polymer film or other polymeric material. As used herein the terms "polymer", "polymer film", and "polymeric material" include, but are not limited to, homopolymers, copolymers, such as for example, block, graft, random, and alternating copolymers, terpolymers, etc. and blends and modifications thereof. Furthermore, unless otherwise specifically limited, the term "polymer" shall include all possible geometrical configurations of the molecule. These configurations include, but are not limited to isotactic, syndiotactic, and random symmetries.

The thickness of the film typically may be from about 35 gauge to about 10 mil. In one aspect, the thickness of the film is from about 40 to about 80 gauge. In another aspect, the thickness of the film is from about 45 to about 50 gauge. In still another aspect, the thickness of the film is about 48 gauge. Examples of polymer films that may be suitable include, but are not limited to, polyolefins, polyesters, polyamides, polyimides, polysulfones, polyether ketones, cellophanes, or any combination thereof. Other non-conducting substrate materials such as paper and paper laminates, metal oxides, silicates, cellulosics, or any combination thereof, also may be used.

In one example, the polymer film comprises polyethylene terephthalate (PET). Polyethylene terephthalate films are used in commercially available susceptors, for example, the QWIKWAVE^{®} Focus susceptor and the MICRORITE^{®} susceptor, both available from Graphic Packaging International (Marietta, Georgia). Examples of polyethylene terephthalate films that may be suitable for use as the substrate include, but are not limited to, MELINEX^{®}, commercially available from DuPont Teijan Films (Hopewell, Virginia), SKYROL, commercially available from SKC, Inc. (Covington, Georgia), and BARRIALOX PET, available from Toray Films (Front Royal, VA), and QU50 High Barrier Coated PET, available from Toray Films (Front Royal, VA).

The polymer film may be selected to impart various properties to the microwave interactive structure, for example, printability, heat resistance, or any other property. As one particular example, the polymer film may be selected to provide a water barrier, oxygen barrier, or a combination thereof. Such barrier film layers may be formed from a polymer film having barrier properties or from any other barrier layer or coating as desired. Suitable polymer films may include, but are not limited to, ethylene vinyl alcohol, barrier nylon, polyvinylidene chloride, barrier fluoropolymer, nylon 6, nylon 6,6, coextruded nylon 6/EVOH/nylon 6, silicon oxide coated film, barrier polyethylene terephthalate, or any combination thereof.

One example of a barrier film that may be suitable for use with the present invention is CAPRAN® EMBLEM 1200M nylon 6, commercially available from Honeywell International (Pottsville, Pennsylvania). Another example of a barrier film that may be suitable is CAPRAN® OXYSHIELD OBS monoaxially oriented coextruded nylon 6/ethylene vinyl alcohol (EVOH)/nylon 6, also commercially available from Honeywell International. Yet another example of a barrier film that may be suitable for use with the present invention is DARTEK® N-201 nylon 6,6, commercially available from Enhance Packaging Technologies (Webster, New York). Additional examples include BARRIALOX PET, available from Toray Films (Front Royal, VA) and QU50 High Barrier Coated PET, available from Toray Films (Front Royal, VA), referred to above.

Still other barrier films include silicon oxide coated films, such as those available from Sheldahl Films (Northfield, Minnesota). Thus, in one example, a susceptor may have a structure including a film, for example, polyethylene terephthalate, with a layer of silicon oxide coated onto the film, and ITO or other material deposited over the silicon oxide. If needed or desired, additional layers or coatings may be provided to shield the individual layers from damage during processing.

The barrier film may have an oxygen transmission rate (OTR) as measured using ASTM D3985 of less than about 20 cc/m²/day. In one aspect, the barrier film has an OTR of less than about 10 cc/m²/day. In another aspect, the barrier film has an OTR of less than about 1 cc/m²/day. In still another aspect, the barrier film has an OTR of less than about 0.5 cc/m²/day. In yet another aspect, the barrier film has an OTR of less than about 0.1 cc/m²/day.

The barrier film may have a water vapor transmission rate (WVTR) of less than about 100 g/m²/day as measured using ASTM F1249. In one aspect, the barrier film has a WVTR of less than about 50 g/m²/day. In another aspect, the barrier film has a WVTR of less than about 15 g/m²/day. In yet another aspect, the barrier film has a WVTR of less than about 1 g/m²/day. In still another aspect, the barrier film has a WVTR of less than about 0.1 g/m²/day. In a still further aspect, the barrier film has a WVTR of less than about 0.05 g/m²/day.

Other non-conducting substrate materials such as metal oxides, silicates, cellulosics, or any combination thereof, also may be used in accordance with the present invention.

The microwave energy interactive material may be applied to the substrate in any suitable manner, and in some instances, the microwave energy interactive material is printed on, extruded onto, sputtered onto, evaporated on, or laminated to the substrate. The microwave energy interactive material may be applied to the substrate in any pattern, and using any technique, to achieve the desired heating effect of the food item. For example, the microwave energy interactive material may be provided as a continuous or discontinuous layer or coating including circles, loops, hexagons, islands, squares, rectangles, octagons, and so forth. Examples of various patterns and methods that may be suitable for use with the present invention are provided in U.S. Patent Nos. 6,765,182; 6,717,121; 6,677,563; 6,552,315; 6,455,827; 6,433,322; 6,410,290; 6,251,451; 6,204,492; 6,150,646; 6,114,679; 5,800,724; 5,759,418; 5,672,407; 5,628,921; 5,519,195; 5,420,517; 5,410,135; 5,354,973; 5,340,436; 5,266,386; 5,260,537; 5221,419; 5,213,902; 5,117,078; 5,039,364; 4,963,420; 4,936,935; 4,890,439; 4,775,771; 4,865,921; and Re. 34,683 . . Although particular examples of patterns of microwave energy interactive material are shown and described herein, it should be understood that other patterns of microwave energy interactive material are contemplated by the present invention.

It will be understood that while susceptor elements are discussed in detail herein, numerous other microwave energy interactive elements and combinations thereof are contemplated hereby. For example, the microwave interactive element may comprise a foil (not shown) having a thickness sufficient to shield one or more selected portions of the food item from microwave energy (sometimes referred to as a "shielding element"). Such shielding elements may be used where the food item is prone to scorching or drying out during heating.

The shielding element may be formed from various materials and may have various configurations, depending on the particular application for which the shielding element is used. Typically, the shielding element is formed from a conductive, reflective metal or metal alloy, for example, aluminum, copper, or stainless steel. The shielding element generally may have a thickness of from about 0.000285 inches to about 0.05 inches. In one aspect, the shielding element has a thickness of from about 0.0003 inches to about 0.03 inches. In another aspect, the shielding element has a thickness of from about 0.00035 inches to about 0.020 inches, for example, 0.016 inches.

As still another example, the microwave interactive element may comprise a segmented foil, such as, but not limited to, those described in U.S. Patent Nos. 6,204,492, 6,433,322, 6,552,315, and 6,677,563. Although segmented foils are not continuous, appropriately spaced groupings of such segments often act as a transmitting element to direct microwave energy to specific areas of the food item. Such foils also may be used in combination with other elements, for example, susceptors.

It will be understood that with some combinations of elements and materials, the microwave interactive material or element may have a grey or silver color that is visually distinguishable from the substrate or the other components in the structure. However, in some instances, it may be desirable to provide a structure having a uniform color and/or appearance. Such a structure may be more aesthetically pleasing to a consumer, particularly when the consumer is accustomed to packages, containers, trays, or other constructs having certain visual attributes, for example, a solid color, a particular pattern, and so on. Thus, for example, the present invention contemplates using a silver or grey toned adhesive to join the microwave interactive elements to the substrate, using a silver or grey toned substrate to mask the presence of the silver or grey toned microwave interactive element, using a dark toned substrate, for example, a black toned substrate, to conceal the presence of the silver or grey toned microwave interactive element, overprinting the metallized side of the web with a silver or grey toned ink to obscure the color variation, printing the non-metallized side of the structure with a silver or grey ink or other concealing color in a suitable pattern or as a solid color layer to mask or conceal the presence of the microwave interactive element, or any other suitable technique or combination thereof.

The present invention may be understood further by way of the following examples, which are not to be construed as limiting in any manner.

### EXAMPLE 1

A construct according to **FIGS. 1A-1D** was formed with the following approximate dimensions: **H1** was about 0.19 in., **L1** was about 6.0 in., **L2** was about 5.5 in., **L3** was about 0.28 in., **L4** was about 0.94 in., **L5** was about 1.9 in., **L6 was** about 6.2 in., **L7** was about 5.4 in., **L8** was about 0.42 in., **R1** was about 0.25 in., **R2** was about 0.25 in., and **R3** was about 0.25 in. However, other suitable dimensions are contemplated. A 48 gauge metallized polyethylene terephthalate film (i.e., a susceptor film) was joined to the construct, substantially as illustrated in **FIG. 1E**.

### EXAMPLE 2

A construct according to **FIGS. 1A-1D** was formed with the following approximate dimensions: **H1** was about 0.19 in., **L1** was about 6.0 in., **L2** was about 5.5 in., **L3** was about 0.28 in., **L4** was about 0.94 in., **L5** was about 1.9 in., **L6** was about 6.2 in., **L7** was about 5.4 in., **L8** was about 0.42 in., **R1** was about 0.25 in., **R2** was about 0.25 in., and **R3** was about 0.25 in. However, other suitable dimensions are contemplated. A 48 gauge metallized polyethylene terephthalate film (i.e., a susceptor film) was joined to the construct, substantially as illustrated in **FIG. 2****.**

### EXAMPLE 3

A construct according to **FIGS. 1A-1D** was formed with the following approximate dimensions: **H1** was about 0.19 in., **L1** was about 6.0 in., **L2** was about 5.5 **in., L3** was about 0.28 in., L4 was about 0.94 in., L5 was about 1.9 in., **L6** was about 6.2 in., **L7** was about 5.4 in., **L8** was about 0.42 in., **R1** was about 0.25 in., **R2** was about 0.25 in., and **R3** was about 0.25 in. However, other suitable dimensions are contemplated. A 48 gauge metallized polyethylene terephthalate film (i.e., a susceptor film) was joined to the construct, substantially as illustrated in **FIG. 3****.**

### EXAMPLE 4

A construct according to **FIGS. 1A-1D** was formed with the following approximate dimensions: **H1** was about 0.19 in., **L1** was about 6.0 **in., L2** was about 5.5 in., **L3** Was about 0.28 in., **L4** was about 0.94 in., **L5** was about 1.9 in., **L6** was about 6.2 in., **L7** was about 5.4 in., **L8** was about 0.42 in., **R1** was about 0.25 in., **R2** was about 0.25 in., and **R3** was about 0.25 in. However, other suitable dimensions are contemplated. A 48 gauge metallized polyethylene terephthalate film (i.e., a susceptor film) was joined to the construct, substantially as illustrated in **FIG. 4**.

### EXAMPLE 5

A construct according to **FIGS. 1A-1D** was formed with the following approximate dimensions: **H1** was about 0.19 in., **L1** was about 6.0 in., **L2** was about 5.5 in., **L3** was about 0.28 in., **L4** was about 0.94 in., **L5** was about 1.9 in., **L6** was about 6.2 in., **L7** was about 5.4 in., **L8** was about 0.42 in., **R1** was about 0.25 in., **R2** was about 0.25 in., and **R3** was about 0.25 in. However, other suitable dimensions are contemplated. A 48 gauge metallized polyethylene terephthalate film (i.e., a susceptor film) was joined to the construct, as substantially as illustrated in **FIG. 5****.**

### EXAMPLE 6

A construct according to **FIGS. 6A-6D** was formed with the following approximate dimensions: **H1** was about 0.19 in., **H2** was about 0.060 in., **L1** was about 6.0 in., **L2** was about 5.5 in., **L3** was about 0.28 in., **L4 was** about 0.94 in., **L5** was about 1.9 in., **L6 was** about 6.2 in., **L7** was about 5.4 in., **L8** was about 1.0 in., **L9** was about 0.42 in., **R1** was about 0.25 in., **R2** was about 0.25 in., **R3** was about 0.25 in., and **R4** was about 0.25 in. However, other suitable dimensions are contemplated. A 48 gauge metallized polyethylene terephthalate film (i.e., a susceptor film) was joined to the construct overlying various components, including at least a portion of the top faces **608** of the platforms **604.**

### EXAMPLE 7

A construct according to **FIGS. 7A-7D** was formed with the following approximate dimensions: **H1** was about 0.19 in., **H2** was about 0.37 in., **L1** was about 7.8 in., **L2** was about 5.2 in., **L3** was about 1.9 in., **L4** was about 2.2 in., **L5** was about 0.94 in., **L6** was about 1.9 in., **L7** was about 6.2 in., **L8** was about 6.4 in., **L9** was about 6.9 in., **L10** was about 1.0 in., **L11** was about 0.19 in., **R1** was about 0.25 in., **R2** was about 0.25 in., **R3** was about 0.25 in., **R4** was about 0.25 in., **R5** was about 0.25 in., **R6** was about 2.3 in., **R7** was about 1.8 in., and **A1** was about 18°. However, other suitable dimensions are contemplated. A 48 gauge metallized polyethylene terephthalate film (i.e., a susceptor film) was joined to the construct overlying various components, including at least a portion of the top faces **708** of the platforms **704.**

### EXAMPLE 8

A construct according to **FIGS. 8A-8D** was formed with the following approximate dimensions: **H1** was about 0.19 in., **H2** was about 0.060 in., **L1** was about 6.0 in., **L2** was about 5.5 in., **L3** was about 0.28 in., **L4** was about 0.94 in., **L5** was about 1.9 in., L6 was about 6.2 in., L7 was about 5.4 in., **L8** was about 0.42 in., **L9** was about 1.5 in., **L10** was about 1.0 in., **R1** was about 0.25 in., **R2** was about 0.25 in., **R3** was about 0.25 in., and **R4** was about 0.25 in. However, other suitable dimensions are contemplated. A 48 gauge metallized polyethylene terephthalate film (i.e., a susceptor film) was joined to the construct overlying various components, including at least a portion of the top faces **808** of the platforms **804.**

### EXAMPLE 9

A construct according to **FIGS. 9A-9E** may have the following approximate dimensions: **H1** may be about 0.19 in., **H2** may be about 0.040 in., **L1** may be about 6.0 in., **L2** may be about 5.5 in., **L3** may be about 0.28 in., **L4** may be about 0.94 in., **L5** may be about 6.2 in., **L6** may be about 5.4 in., **L7** may be about 0.42 in., **L8** may be about 0.75 in., **R1** may be about 0.25 in., **R2** may be about 0.25 in., **R3** may be about 0.25 in., and **R4** may be about 0.25 in. However, other suitable dimensions are contemplated. A susceptor film or other microwave energy interactive element may overlie at least a portion of the construct.

### EXAMPLE 10

A construct according to **FIGS. 10A-10D** was formed with the following approximate dimensions: **H1** was about 0.27 in., **H2** was about 0.060 in., **L1** was about 6.0 in., **L2** was about 5.7 in., **L3** was about 0.17 in., **L4** was about 1.1 in., **L5** was about 1.9 in., **L6** was about 6.2 in., **L7** was about 5.5 in., **L8** was about 0.36 in., **L9** was about 1.5 in., **L10** was about 1.0 in., **R1** was about 0.25 in., **R2** was about 0.25 in., **R3** was about 0.25 in., and **R4** was about 0.25 in. However, other suitable dimensions are contemplated. A 48 gauge metallized polyethylene terephthalate film (i.e., a susceptor film) was joined to the construct overlying various components, including at least a portion of the top faces **1008** of the platforms **1004.**

### EXAMPLE 11

A construct according to **FIGS. 11A-11E** was formed with the following approximate dimensions: **H1** was about 0.19 in., **H2** was about 0.19 in., **H3** was about 0.25 in., **H4** was about 0.37 in., **L1** was about 7.6 in., **L2** was about 5.4 in., **L3** was about 2.0 in., **L4** was about 2.2 in., **L5** was about 6.6 in., **L6** was about 6.2 in., **L7** was about 5.5 in., **L8** was about 6.0 in., **L9** was about 0.19 in., **R1** was about 2.2 in., **R2** was about 1.7 in., **R3** was about 0.50 in., **R4** was about 0.16 in., **R5** was about 0.080 in., **R6** was about 0.25 in., **R7** was about 0.19 in., **R8** was about 0.020 in., **R9** was about 0.25 in., **A1** was about 18°, **A2** was about 30°, and **A3** was about 15°. However, other suitable dimensions are contemplated. A 48 gauge metallized polyethylene terephthalate film (i.e., a susceptor film) was joined to the construct overlying various components, including at least a portion of the top faces **1118** of the platforms **1110.**

### EXAMPLE 12

A construct according to **FIGS. 12A-12D** was formed with the following approximate dimensions: **H1** was about 0.19 in., **H2** was about 0.37 in., **L1** was about 7.8 **in., L2** was about 5.5 in., **L3** was about 2.0 in., **L4** was about 2.2 in., **L5** was about 1.1 in., **L6** was about 6.9 in. (square), **L7** was about 6.4 in. (square), **L8** was about 1.0 in., **L9** was about 6.2 in. (square), **L10** was about 0.19 in., **R1** was about 2.3 in., **R2** was about 1.8 in., **R3** was about 0.50 in., **R4** was about 0.25 in., **R5** was about 0.25 in., **R6** was about 0.19 in., **R7** was about 0.19 in., **R8** was about 0.25 in., **R9** was about 0.25 in., **R10** was about 0.19 in., and **A1** was about 18°. However, other suitable dimensions are contemplated. A 48 gauge metallized polyethylene terephthalate film (i.e., a susceptor film) was joined to the construct overlying various components, including at least a portion of the top faces **1218** of the platforms **1210.**

### EXAMPLE 13

A construct according to **FIGS. 14A-14E** may be formed with the following approximate dimensions: **H1** may be about 0.25 in., **H2** may be about 1 in., **L1** may be about 9.2 in., **L2** may be about 9.6 in., **L3** may be about 9.2 in., **L4** may be about 7.0 in., **L5** may be about 8.5 in., **L6** may be about 7.0 in., **L7** may be about 6.6 in., **L8** may be about 4.4 in., **L9** may be about 5.9 in., **L10** may be about 0.19 in., **L11** may be about 6.7 in., **L12** may be about 6.4 in., **L13** may be about 4.2 in., **L14** may be about 5.6 in., **R1** may be about 1.3 in., **R2** may be about 1.1 in., **R3** may be about 1.1 in., **R4** may be about 0.78 in., **R5** may be about 0.56 in., **R6** may be about 0.48 in., **R7** may be about 0.25 in., **R8** may be about 0.25 in., and **A1** may be about 21 °. Other suitable dimensions are contemplated. A susceptor film or other microwave energy interactive element may overlie at least a portion of the construct.

### EXAMPLE 14

A construct according to **FIGS. 15A-15F** may be formed with the following approximate dimensions: **H1** may be about 0.25 in., **H2** may be about 0.063 in., **H3** may be about 1.0 in., **L1** may be about 9.2 in., **L2** may be about 9.6 in., **L3** may be about 9.2 in., **L4** may be about 7.0 in., **L5** may be about 8.5 in., **L6** may be about 1.0 in., **L7** may be about 7.0 in., **L8** may be about 6.6 in., **L9** may be about 4.4 in., **L10** may be about 5.9 in., **L11** may be about 0.2 in., **L12** may be about 6.7 in., **L13** may be about 6.4 in., **L14** may be about 4.2 in., **L15** may be about 5.6 in., **R1** may be about 1.3 in., **R2** may be about 1.1 in., **R3** may be about 1.1 in., **R4** may be about 0.78 in., **R5** may be about 0.56 in., **R6** may be about 0.25 in., **R7** may be about 0.25 in., **R8 may** be about 0.25 in., and **A1** may be about 21°. Other suitable dimensions are contemplated. A susceptor film or other microwave energy interactive element may overlie at least a portion of the construct.

### EXAMPLE 15

A construct according to **FIGS. 16A-16F** may be formed with the following approximate dimensions: **H1** may be about 0.25 in., **H2** may be about 0.063 in., **H3** may be about 1.0 in., **L1** may be about 9.2 in., **L2** may be about 9.6 in., **L3** may be about 9.2 in., **L4** may be about 7.0 in., **L5** may be about 8.5 in., **L6** may be about 1.0 in., **L7** may be about 7.0 in., **L8** may be about 6.6 in., **L9** may be about 4.4 in., **L10** may be about 5.9 in., **L11** may be about 0.2 in., **L12** may be about 6.7 in., **L13** may be about 6.4 in., **L14** may be about 4.2 in., **L15** may be about 5.6 in., **R1** may be about 1.3 in., **R2** may be about 1.1 in., **R3** may be about 1.1 in., **R4** may be about 0.78 in., **R5** may be about 0.56 in., **R6** may be about 0.25 in., **R7** may be about 0.25 in., **R8** may be about 0.25 in., and **A1** may be about 21°. Other suitable dimensions are contemplated. A susceptor film or other microwave energy interactive element may overlie at least a portion of the construct.

### EXAMPLE 16

A construct according to **FIGS. 17A-17E** may be formed with the following approximate dimensions: **H1** may be about 0.25 in., **L1** may be about 7.9 in., **L2** may be about 1.0 in., **L3** may be about 6.0 in., **L4** may be about 6.4 in., **R1** may be about 0.70 in., **R2** may be about 0.54 in., **R3** may be about 0.36 in., **R4** may be about 9.0 in., **R5** may be about 0.25 in., **R6** may be about 0.50 in., **R7** may be about 0.25 in., and **A1** may be about 45°. Other suitable dimensions are contemplated. A susceptor film or other microwave energy interactive element may overlie at least a portion of the construct.

### EXAMPLE 17

A construct according to **FIGS**. **18A-18E** may be formed with the following approximate dimensions: **H1** may be about 0.25 in., **L1** may be about 7.9 in., **L2** may be about 1.0 in., **L3** may be about 6.0 in., **L4** may be about 6.4 in., **R1** may be about 0.70 in., **R2** may be about 0.54 in., **R3** may be about 0.36 in., **R4** may be about 9.0 in., **R5** may be about 0.25 in., **R6** may be about 0.50 in., **R7** may be about 0.25 in., **A1** may be about 45°, and **A2** may be about 18°. Other suitable dimensions are contemplated. A susceptor film or other microwave energy interactive element may overlie at least a portion of the construct.

### EXAMPLE 18

A construct according to **FIGS. 19A-19E** may be formed with the following approximate dimensions: **H1** may be about 1.0 in., **H2** may be about 0.25 in., **L1** may be about 10 in., **L2** may be about 8.6 in., **L3** may be about 7.5 in., **L4** may be about 1.0 in., **L5** may be about 0.12 in., **L6** may be about 7.9 in., **L7** may be about 7.5 in., **L8** may be about 5.3 in., **L9** may be about 6.7 in., **L10** may be about 8.3 in., **L11** may be about 7.9 in., **L12** may be about 5.7 in., **L13** may be about 7.2 in., **R1** may be about 1.3 in., **R2** may be about 1.1 in., **R3** may be about 1.1 in., **R4** may be about 0.78 in., **R5** may be about 0.56 in., **R6** may be about 0.25 in., **R7** may be about 0.25 in., **R8** may be about 0.50 in., **R9 may** be about 0.25 in., **R10** may be about 0.25 in., and **A1** may be about 20°. Other suitable dimensions are contemplated. A susceptor film or other microwave energy interactive element may overlie at least a portion of the construct.

### EXAMPLE 19

A construct according to **FIGS. 20A-20D** may be formed with the following approximate dimensions: **H1** may be about 0.25 in., **H2** may be about 0.060 in., **H3** may be about 0.63 in., **L1** may be about 11 in., **L2** may be about 10 in., **L3** may be about 1.4 in., **L4** may be about 9.4 in., **L5** may be about 10 in., **R1** may be about 60 in., **R2** may be about 0.030 in., **R3** may be about 60 in., **R4** may be about 0.25 in., **R5** may be about 0.25 in., **R6** may be about 0.25 in., and **A1** may be about 17°. Other suitable dimensions are contemplated. A susceptor film or other microwave energy interactive element may overlie at least a portion of the construct.

### EXAMPLE 20

A construct according to **FIGS. 21A-21D** may be formed with the following approximate dimensions: **H1** may be about 0.25 in., **H2** may be about 0.47 in., **L1** may be about 6.1 in., **L2** may be about 5.7 in., **L3** may be about 0.16 in., **L4 may be** about 1.0 in., **L5** may be about 5.1 in., **R1** may be about 16 in., **R2** may be about 0.020 in., **R3** may be about 0.25 in., **R4** may be about 0.25 in., **R5** may be about 0.25 in., **R6** may be about 16 in. and **A1** may be about 12°. Other suitable dimensions are contemplated hereby. A susceptor film or other microwave energy interactive element may overlie at least a portion of the construct.

### EXAMPLES 21-32

Commercially available frozen Lean Cuisine and Corner Bistro panini type sandwiches were evaluated using various trays and microwave ovens. Each sandwich was heated at full power for about 3 minutes and 20 seconds unless indicated otherwise. The results of the evaluations are presented in **Table** 1, where:
Control disk = a corrugated board with a susceptor overlying one surface and six elongated apertures with rounded, enlarged ends extending through the thickness of the disk (provided with the food items);
LC = Lean Cuisine;
CB = Corner Bistro;
A = 1000W Amana, 0.9 cu. ft., 12.5 in. turnable diameter;
B = 1100W Panasonic, 1.0 cu. ft., 13.5 in. turntable diameter;
C = 1200W Panasonic, 0.9 cu. ft., 13.5 in. turnable diameter;
D = 1000W Amana Radarange, 1.1 cu. ft., no turntable;
E = 800W Panasonic, 0.7 cu. ft., 9.5 in. turntable diameter;
F = 700W Samsung, 0.7 cu. ft. 11 in. turntable diameter; and
G = 1100W Panasonic, 1.1 cu. ft., 14 in. turntable diameter (cook time increased to 4 min);
and where:
   0 = no browning and/or crisping;
   7 = optimal browning and/or crisping; and
   1, 2, 3, 4, 5, and 6 = various intermediate degrees of browning and/or crisping between 0 and 7.

**Table 1.**

| Example | Food item | Microwave oven | Control disk | Tray with tapered platforms (**FIG. 2****,** Example 2) | Tray with tapered platforms (**FIG. 3**, Example 3) | Tray with tapered platforms (**FIG. 4**, Example 4) | Tray with tapered platforms and slot apertures (**FIG. 5**, Example 5) | Tray with tapered platforms and venting channels (**FIGS. 8A-8D**, Example 8) | Tray with tapered platforms and venting channels (**FIGS. 10A-****10D,** Example 10) |
|---|---|---|---|---|---|---|---|---|---|
| 21 | LC | A | 0 | 2 | - | - | 4 | 6 | 7 |
| 22 | LC | B | 0 | 5 | - | - | 5 | 6 | 6 |
| 23 | LC | C | 0 | 5 | - | - | 0 | 6 | 5 |
| 24 | LC | D | 0 | 5 | - | - | 2 | 7 | 6 |
| 25 | LC | E | 0 | 1 | - | - | 0 | 7 | 6 |
| 26 | LC | F | 0 | 3 | - | - | 1 | 2 | 2 |
| 27 | LC | G | 0 | 0 | - | - | 2 | 3 | 0 |
| 28 | CB | A | 0 | - | 4 | 3 | - | 5 | 7 |
| 29 | CB | B | 2 | - | 5 | 7 | - | 7 | 6 |
| 30 | CB | C | 3 | - | 4 | 6 | - | 5 | 6 |
| 31 | LC | A | 0 | - | 4 | 1 | - | 5 | 6 |
| 32 | LC | B | 1 | - | 7 | 7 | - | 5 | 6 |
| **AVG** | - | - | **0.5** | **3** | **4.8** | **4.8** | **2** | **5.3** | **3.6** |

### EXAMPLE 33

Commercially available frozen Stouffer's Corner Bistro grilled chicken Italian panini sandwiches were heated using various trays to compare the level of browning achieved on the surface of the food item.

A first sandwich was placed in an open face configuration on the susceptor disk provided with the sandwich (referred to as "Control disk" in Examples 21-32). The sandwich was heated according to package directions for 3 minutes in an 1100W Panasonic microwave oven.

A second sandwich was heated for 3 minutes in the same 1100W Panasonic microwave oven using a tray according to the invention, substantially as shown in **FIGS. 8A-8D****,** having the dimensions provided in Example 8.

A Konica Minolta BC-10 baking meter having an aperture size of about 7/16 in. (0.4375 in.) was used to measure the level of browning on the surface of each piece of bread at designated locations, as indicated schematically in **FIG. 23****.** The measurements taken at each position were averaged for the two pieces of bread in each sandwich. The results are presented in baking contrast units ("BCU"), where the lower the BCU, the darker the color (i.e., the greater degree of browning). The results of the evaluation are presented in **Table 2.**

**Table 2.**

| **Position** | **Control disk** | **Experimental disk** |
|---|---|---|
| 1 | 3.85 | 2.85 |
| 2 | 3.88 | 2.67 |
| 3 | 3.40 | 1.95 |
| 4 | 3.67 | 2.77 |
| 5 | 3.92 | 3.33 |
| 6 | 3.90 | 2.88 |
| 7 | 4.02 | 3.39 |
| 8 | 4.10 | 3.24 |
| 9 | 4.09 | 3.55 |
| 10 | 4.03 | 2.14 |
| **Average BCU** | **3.90** | **2.96** |

Although certain embodiments of this invention have been described with a certain degree of particularity, those skilled in the art could make numerous alterations to the disclosed embodiments without departing from the scope of this invention as defined in the appended claims. All directional references (e.g., upper, lower, upward, downward, left, right, leftward, rightward, top, bottom, above, below, vertical, horizontal, clockwise, and counterclockwise) are used only for identification purposes to aid the reader's understanding of the various embodiments of the present invention, and do not create limitations, particularly as to the position, orientation, or use of the invention unless specifically set forth in the claims. Joinder references (e.g., joined, attached, coupled, connected, and the like) are to be construed broadly and may include intermediate members between a connection of elements and relative movement between elements. As such, joinder references do not necessarily imply that two elements are connected directly and in fixed relation to each other.

It will be recognized by those skilled in the art, that various elements discussed with reference to the various embodiments may be interchanged to create entirely new embodiments coming within the scope of the present invention. It is intended that all matter contained in the above description or shown in the accompanying drawings shall be interpreted as illustrative only and not limiting. Changes in detail or structure may be made without departing from the invention as defined in the appended claims. The detailed description set forth herein is not intended nor is to be construed to limit the present invention or otherwise to exclude any such other embodiments, adaptations, variations, modifications, and equivalent arrangements of the present invention as defined in the appended claims.

Accordingly, it will be readily understood by those persons skilled in the art that, in view of the above detailed description of the invention, the present invention is susceptible of broad utility and application. Many adaptations of the present invention other than those herein described, as well as many variations, modifications, and equivalent arrangements will be apparent from or reasonably suggested by the present invention and the above detailed description thereof, without departing from the substance or scope of the present invention as defined in the appended claims.

While the present invention is described herein in detail in relation to specific aspects, it is to be understood that this detailed description is only illustrative and exemplary of the present invention and is made merely for purposes of providing a full and enabling disclosure of the present invention. The detailed description set forth herein is not intended nor is to be construed to limit the present invention or otherwise to exclude any such other embodiments, adaptations, variations, modifications, and equivalent arrangements of the present invention.

## Claims

1. A tray (2000, 2100, 2200) for heating, browning, and/or crisping a food item in a microwave oven, comprising:
a substantially planar base (2002, 2102, 2202) having a peripheral edge (2220);
a platform (2008, 2108, 2208) extending upwardly from the base, the platform having a central portion (2010, 2110, 2210) and a peripheral portion (2012, 2112, 2212), wherein
the central potion (2010, 2110, 2210) is elevated relative to the peripheral portion (2012, 2112,2212) and the base (2002, 2102, 2202), and
the peripheral portion (2012, 2112, 2212) extends obliquely and outwardly from the central portion (2010, 2110, 2210) to the base (2002, 2102, 2202); and
a microwave energy interactive material overlying at least a portion of the central portion (2010, 2110, 2210) of the platform (2008, 2108, 2208),
**characterized in that** the base (2002, 2102, 2202) includes a line of disruption (2218) extending substantially between a pair of points that lie along the peripheral edge (2220).

2. The tray of claim 1, wherein the platform (2008, 2108, 2208) is substantially circular in shape and substantially symmetrical along at least one centerline (CL, CT) of the tray (2000, 2100, 2200).

3. The tray of claim 1 or 2, wherein the microwave energy interactive material comprises a susceptor operative for absorbing at least a portion of impinging microwave energy and converting it to thermal energy.

4. The tray of any of claims 1-3, wherein the platform (2008, 2108, 2208) is contoured.

5. The tray of any of claims 1-4, wherein the platform (2008, 2108, 2208) has a substantially domed surface.

6. The tray of any of claims 1-5, wherein the central portion (2010, 2110, 2210) of the platform (2008, 2108, 2208) has a substantially curvilinear surface.

7. The tray of any of claims 1-6, wherein the peripheral portion (2012, 2112, 2212) of the platform (2008, 2108, 2208) has a substantially curvilinear surface.

8. The tray of any of claims 1-6, wherein the peripheral portion (2012, 2112, 2212) of the platform (2008, 2108, 2208) has a substantially flattened surface.

9. The tray any of claims 1-8, further comprising at least one channel (2014, 2114, 2214) extending at least partially across the platform (2008, 2108, 2208).

10. The tray of claim 9, wherein the channel (2014, 2114, 2214) extends through the peripheral portion (2012, 2112, 2212).

11. The tray of claim 9 or 10, wherein
the tray (2000, 2100, 2200) includes a first centerline (CL) extending in a first direction and a second centerline (CT) extending in a second direction substantially perpendicular to the first direction, and
the channel (2014, 2114, 2214) extends in the first direction substantially perpendicular to the second centerline (CT).

12. The tray of any of claims 9-11, wherein
the channel (2014, 2114, 2214) is a first channel of a plurality of channels extending in the first direction, and
at least some channels of the plurality of channels are parallel to one another.

13. The tray of any of claims 9-11, wherein
the channel (2014, 2114, 2214) is a first channel, and
the tray further comprises a second channel extending in the second direction substantially perpendicular to the first channel.

14. The tray of any of claims 1-13, wherein
the peripheral edge (2220) includes a curvilinear portion, and
the pair of points lie along the curvilinear portion of the peripheral edge (2220).

15. The tray of any of claims 1-14, wherein the line of disruption (2218) at least partially defines a handle (2222), wherein the handle (2222) is for being folded upwardly towards the platform (2008, 2108, 2208) along the line of disruption (2218).

16. The tray of any of claims 1-14, wherein
the line of disruption (2218) at least partially defines a handle (2222),
the tray is a first tray, and
the handle (2222) serves as a guide for positioning the first tray relative to a second tray.

17. The tray of any of claims 1-16, wherein
the pair of points is a first pair of points,
the line of disruption (2218) is a first line of disruption, and
the base includes a second line of disruption extending substantially between a second pair of points that lie along the peripheral edge (2220).

18. The tray of any of claims 1-17, wherein the microwave energy interactive material further overlies at least a portion of the peripheral area of the platform (2008, 2108, 2208).

## Patentansprüche

1. Tablett (2000, 2100, 2200) zum Erwärmen, Bräunen und/oder Knusprig-Braten eines Lebensmittelartikels in einem Mikrowellenherd, umfassend:
eine im Wesentlichen flache Basis (2002, 2102, 2202), die einen Umfangsrand (2220) aufweist;
eine Plattform (2008, 2108, 2208), die sich von der Basis nach oben erstreckt, wobei die Plattform einen Mittelabschnitt (2010, 2110, 2210) und einen Randabschnitt (2012, 2112, 2212) aufweist, wobei
der Mittelabschnitt (2010, 2110, 2210) bezüglich des Randabschnitts (2012, 2112, 2212) und der Basis (2002, 2102, 2202) erhöht ist und
sich der Randabschnitt (2012, 2112, 2212) schräg und nach außen von dem Mittelabschnitt (2010, 2110, 2210) zu der Basis (2002, 2102, 2202) erstreckt und
wobei ein Mikrowellenenergie-interaktives Material über mindestens einem Abschnitt des Mittelabschnitts (2010, 2110, 2210) von der Plattform (2008, 2108 2208) liegt,
**dadurch gekennzeichnet, dass** die Basis (2002, 2102, 2202) eine Unterbrechungslinie (2218) aufweist, die sich im Wesentlichen zwischen einem Paar von Punkten erstreckt, die entlang dem Umfangsrand (2220) liegen.

2. Tablett nach Anspruch 1, wobei die Plattform (2008, 2108, 2208) im Wesentlichen kreisförmig und im Wesentlichen symmetrisch entlang mindestens einer Mittellinie (CL, CT) des Tabletts (2000, 2100, 2200) ist.

3. Tablett nach Anspruch 1 oder 2, wobei das Mikrowellenenergie-interaktive Material einen Suszeptor aufweist, um mindestens einen Teil der auftreffenden Mikrowellenenergie zu absorbieren und sie in Wärmeenergie umzuwandeln.

4. Tablett nach einem der Ansprüche 1 bis 3, wobei die Plattform (2008, 2108, 2208) konturiert ist.

5. Tablett nach einem der Ansprüche 1 bis 4, wobei die Plattform (2008, 2108, 2208) eine im Wesentlichen gewölbte Fläche aufweist.

6. Tablett nach einem der Ansprüche 1 bis 5, wobei der Mittelabschnitt (2010, 2110, 2210) von der Plattform (2008, 2108, 2208) eine im Wesentlichen gekrümmte Fläche aufweist.

7. Tablett nach einem der Ansprüche 1 bis 6, wobei der Randabschnitt (2012, 2112, 2212) von der Plattform (2008, 2108, 2208) eine im Wesentlichen gekrümmte Fläche aufweist.

8. Tablett nach einem der Ansprüche 1 bis 6, wobei der Randabschnitt (2012, 2112, 2212) von der Plattform (2008, 2108, 2208) eine im Wesentlichen abgeflachte Fläche aufweist.

9. Tablett nach einem der Ansprüche 1 bis 8, ferner umfassend mindestens einen Kanal (2014, 2114, 2214), der sich mindestens teilweise über die Plattform (2008, 2108, 2208) erstreckt.

10. Tablett nach Anspruch 9, wobei sich der Kanal (2014, 2114, 2214) durch den Randabschnitt (2012, 2112, 2212) erstreckt.

11. Tablett nach Anspruch 9 oder 10, wobei
das Tablett (2000, 2100, 2200) eine erste Mittellinie (CL), die sich in einer ersten Richtung erstreckt, und eine zweite Mittellinie (CT) aufweist, die sich in einer zweiten Richtung im Wesentlichen senkrecht zu der ersten Richtung erstreckt, und
sich der Kanal (2014, 2114, 2214) in der ersten Richtung im Wesentlichen senkrecht zu der zweiten Mittellinie (CT) erstreckt.

12. Tablett nach einem der Ansprüche 9 bis 11, wobei
der Kanal (2014, 2114, 2214) ein erster Kanal von mehreren Kanälen ist, die sich in der ersten Richtung erstrecken, und
mindestens einige Kanäle der mehreren Kanäle parallel zueinander sind.

13. Tablett nach einem der Ansprüche 9 bis 11, wobei
der Kanal (2014, 2114, 2214) ein erster Kanal ist und
das Tablett ferner einen zweiten Kanal aufweist, der sich in der zweiten Richtung im Wesentlichen senkrecht zu dem ersten Kanal erstreckt.

14. Tablett nach einem der Ansprüche 1 bis 13, wobei
der Umfangsrand (2220) einen kurvenförmigen Abschnitt aufweist und
das Paar von Punkten entlang dem kurvenförmigen Abschnitt des Umfangsrands (2220) liegt.

15. Das Tablett nach einem der Ansprüche 1 bis 14, wobei die Unterbrechungslinie (2218) mindestens teilweise einen Griff (2222) definiert, wobei der Griff (2222) dazu bestimmt ist, um nach oben in Richtung der Plattform (2008, 2108 2208) entlang der Unterbrechungslinie (2218) geklappt zu werden.

16. Tablett nach einem der Ansprüche 1 bis 14, wobei
die Unterbrechungslinie (2218) mindestens teilweise einen Griff (2222) definiert,
das Tablett ein erstes Tablett ist und
der Griff (2222) als Führung dient, um das erste Tablett bezüglich eines zweiten Tabletts zu positionieren.

17. Tablett nach einem der Ansprüche 1 bis 16, wobei
das Paar von Punkten ein erstes Paar von Punkten ist,
die Unterbrechungslinie (2218) eine erste Unterbrechungslinie ist und
die Basis eine zweite Unterbrechungslinie aufweist, die sich im Wesentlichen zwischen einem zweiten Paar von Punkten erstreckt, die entlang dem Umfangsrand (2220) liegen.

18. Tablett nach einem der Ansprüche 1 bis 17, wobei das Mikrowellenenergie-interaktive Material ferner mindestens über einem Abschnitt des Randbereichs von der Plattform (2008, 2108, 2208) liegt.

## Revendications

1. Plateau (2000, 2100, 2200) destiné à chauffer, brunir et/ou faire croustiller un produit alimentaire dans un four à microondes, comprenant:
une base (2002, 2102, 2202) substantiellement planaire, présentant un bord périphérique (2220);
une plateforme (2008, 2108, 2208) s'étendant vers le haut à partir de la base, la plateforme présentant une partie centrale (2010, 2110, 2210) et une partie périphérique (2012, 2112, 2212),
la partie périphérique (2012, 2112, 2212) s'étend de façon oblique et vers l'extérieur à partir de la partie centrale (2010, 2110, 2210) vers la base (2002, 2102, 2202) ; et
un matériau sensible à l'énergie microonde recouvrant au moins une partie de la partie centrale (2010, 2110, 2210) de la plateforme (2008, 2108, 2208),
**caractérisé en ce que** la base (2002, 2102, 2202) comprend une ligne de rupture (2218) s'étendant substantiellement entre une paire de points situés le long du bord périphérique (2220).

2. Plateau selon la revendication 1, dans lequel la plateforme (2008, 2108, 2208) présente une forme substantiellement circulaire et substantiellement symétrique le long d'au moins une ligne médiane (CL, CT) du plateau (2000, 2100, 2200).

3. Plateau selon la revendication 1, dans lequel le matériau sensible à l'énergie microonde comprend un suscepteur opérationnel pour absorber au moins une partie de l'énergie microonde incidente et pour convertir celle-ci en énergie thermique.

4. Plateau selon l'une quelconque des revendications 1-3, dans lequel la plateforme (2008, 2108, 2208) est profilée.

5. Plateau selon l'une quelconque des revendications 1-4, dans lequel la plateforme (2008, 2108, 2208) présente une surface substantiellement en forme de dôme.

6. Plateau selon l'une quelconque des revendications 1-5, dans lequel la partie centrale (2010, 2110, 2210) de la plateforme (2008, 2108, 2208) présente une surface substantiellement curvilinéaire.

7. Plateau selon l'une quelconque des revendications 1-6, dans lequel la partie périphérique (2012, 2112, 2212) de la plateforme (2008, 2108, 2208) présente une surface substantiellement curvilinéaire.

8. Plateau selon l'une quelconque des revendications 1-6, dans lequel la partie périphérique (2012, 2112, 2212) de la plateforme (2008, 2108, 2208) présente une surface substantiellement aplanie.

9. Plateau selon l'une quelconque des revendications 1-8, comprenant en outre au moins un canal (2014, 2114, 2214) s'étendant au moins partiellement à travers la plateforme (2008, 2108, 2208).

10. Plateau selon la revendication 9, dans lequel le canal (2014, 2114, 2214) s'étend à travers la partie périphérique (2012, 2112, 2212).

11. Plateau selon la revendication 9 ou 10, dans lequel le plateau (2000, 2100, 2200) comprend une première ligne médiane (CL) s'étendant dans une première direction et une deuxième ligne médiane (CT) s'étendant dans une deuxième direction substantiellement perpendiculaire à la première direction, et
le canal (2014, 2114, 2214) s'étend dans la première direction substantiellement perpendiculairement à la deuxième ligne médiane (CT).

12. Plateau selon l'une quelconque des revendications 9-11, dans lequel
le canal (2014, 2114, 2214) est un premier canal parmi une pluralité de canaux s'étendant dans la première direction, et
au moins certains canaux parmi la pluralité de canaux sont parallèles les uns aux autres.

13. Plateau selon l'une quelconque des revendications 9-11, dans lequel
le canal (2014, 2114, 2214) est un premier canal, et
le plateau comprend en outre un deuxième canal s'étendant dans la deuxième direction substantiellement perpendiculairement au premier canal.

14. Plateau selon l'une quelconque des revendications 1-13, dans lequel
le bord périphérique (2220) comprend une partie curvilinéaire du bord périphérique (2220).

15. Plateau selon l'une quelconque des revendications 1-14, dans lequel la ligne de rupture (2218) définit au moins partiellement une poignée (2222), la poignée (2222) étant destinée à être pliée vers le haut, vers la plateforme (2008, 2108, 2208), le long de la ligne de rupture (2218).

16. Plateau selon l'une quelconque des revendications 1-14, dans lequel
la ligne de rupture (2218) définit au moins partiellement une poignée (2222),
le plateau est un premier plateau, et
la poignée (2222) sert comme guide pour positionner le premier plateau par rapport à un deuxième plateau.

17. Plateau selon l'une quelconque des revendications 1-16, dans lequel
la paire de points est une première paire de points,
la ligne de rupture (2218) est une première ligne de rupture, et
la base comprend une deuxième ligne de rupture (2218) s'étendant substantiellement entre une deuxième paire de points situés le long du bord périphérique (2220).

18. Plateau selon l'une quelconque des revendications 1-17, dans lequel le matériau sensible à l'énergie microonde recouvre en outre au moins partiellement une partie de la zone périphérique de la plateforme (2008, 2108, 2208).
